# EUROPEAN PATENT APPLICATION

(11) **EP 4 814 668 A1**
(43) Date of publication of application: **30.09.2026**
(21) Application number: 26167000.4
(22) Date of filing: 24.03.2026
(51) Int. Cl.: G06F 3/01, G06F 3/0354, G06F 3/038

(54) **ACTIVE STYLUS AND CONTROL METHOD THEREOF**

(30) Priority: 24.03.2025 CN 202510372590; 30.01.2026 CN 202610143754
(71) Applicant: Shenzhen Qianfenyi Intelligent Technology Co., Ltd., Shenzhen, Guangdong 518000 (CN)
(72) Inventor: YANG, Shuai, Shenzhen (CN); LI, Zhuojun, Shenzhen (CN); PENG, Jiawei, Shenzhen (CN); ZHAN, Ziyu, Shenzhen (CN)
(74) Representative: Metida

(57) **Abstract**

An active stylus, including a drive device and a motor device. The drive device is configured to provide a drive signal. The drive signal includes a signal obtained by processing a writing sound recording of a traditional pen. The motor device is configured to receive the drive signal. The drive signal is configured to drive the motor device to generate a vibration signal, a sound signal or a combination thereof to achieve a vibration effect, a sound effect or a vibration-sound combined effect of the active stylus. The vibration signal and the sound signal are configured to characterize a brush type of the active stylus. A method for controlling the active stylus is also provided.

## Description

### TECHNICAL FIELD

This application relates to electronic technology, and more particularly to an active stylus and a control method thereof.

### BACKGROUND

An active stylus, also referred to as an active pen, is an advanced electronic writing tool. The active stylus interacts with touchscreens through built-in electronic components and sensors, providing a more precise and fluent writing experience than traditional passive styluses. With continuous technological advancements, the functionality and performance of active styluses have been continuously improved, making them one of the indispensable accessories for smart devices.

However, current active styluses offer a poor degree of restoration of the traditional pen-and-paper interaction experience. For example, in terms of simulating the sound and vibration feedback during writing, the existing active styluses struggle to reproduce the realistic feedback generated by the friction between traditional paper and pen tip, resulting in a significant discrepancy from the actual writing experience and thus affecting the user experience.

At present, active styluses that can simulate the feel of real writing have been developed. Such active styluses simulate vibration feedback by installing a motor and sound feedback by installing a buzzer or speaker. However, this approach not only increases the occupied space of the active stylus, but may also affect the battery life, thereby severely impacting the overall performance and user experience.

Therefore, how to improve the user experience of active styluses without affecting the overall performance has become a technical problem urgently needed to be solved.

### SUMMARY

In view of the above technical defects, an object of the disclosure is to provide an active stylus and a control method thereof, which can improve the degree of restoration of the active stylus to traditional pen-and-paper interaction experience without adding a sound simulator, thereby enhancing user experience.

In order to achieve the above object, the following technical solutions are adopted.

In a first aspect, this application provides an active stylus, comprising:
a drive device; and
a motor device;
characterized in that the drive device is configured to provide at least one drive signal, and each of the at least one drive signal comprises a signal obtained by processing writing sound recording of a traditional pen; and
the motor device is configured to receive the at least one drive signal, the at least one drive signal is configured to drive the motor device to generate a vibration signal, a sound signal or a combination thereof to achieve a vibration effect, a sound effect or a vibration-sound combined effect of the active stylus, and the vibration effect, the sound effect or the vibration-sound combined effect is configured to characterize a brush type of the active stylus.

In this application, the motor device is enabled to generate the vibration signal and the sound signal simultaneously by receiving the drive signal. The vibration signal simulates the tactile sensation during traditional writing processes, and the sound signal restores the friction sound during traditional writing processes, so as to characterize brush types of different active styluses. This improves the restoration degree of the active stylus to traditional pen and paper, thereby enhancing the interactivity and user experience of the active stylus. Meanwhile, vibration and sound emission functions are integrated into a single component, which not only saves internal space but also reduces power consumption, thus further optimizing user experience.

In some embodiments, the active stylus further comprises a pressure detection device; wherein the pressure detection device is configured to detect a tip pressure of the active stylus to generate a pressure detection signal; and the drive device is further configured to adjust the at least one drive signal according to the pressure detection signal to adjust the vibration signal, the sound signal or a combination thereof, thereby adjusting the vibration effect, the sound effect or the vibration-sound combined effect.

The drive signal is adjusted by the active stylus according to real-time tip pressure from a user, so as to regulate the vibration effect and sound effect of the motor device. The feedback of the active stylus is thereby enabled to match the current writing state in real time, which facilitates further improvement of the user experience of the active stylus.

In some embodiments, each of the at least one drive signal comprises a pulse-width modulation (PWM) wave signal; the drive device comprises a duty cycle adjustment unit; and the duty cycle adjustment unit is configured to adjust a duty cycle of the PWM wave signal according to the pressure detection signal, so as to adjust the vibration signal, the sound signal or a combination thereof, thereby adjusting the vibration effect, the sound effect or the vibration-sound combined effect.

In some embodiments, in response to a case that the pressure detection signal is within a first preset pressure range, the duty cycle adjustment unit is configured to adjust the duty cycle of the PWM wave signal to a first preset value; or
in response to a case that the pressure detection signal is within a second preset pressure range, the duty cycle adjustment unit is configured to adjust the duty cycle of the PWM wave signal to a second preset value;
characterized in that an upper limit of the first preset pressure range is less than a lower limit of the second preset pressure range, and the first preset value is less than the second preset value.

The duty cycle of the drive signal is correspondingly adjusted by detecting the magnitude of a pressure detection signal at the tip of the active stylus, so as to realize regulation of the vibration signal of the motor device. For example, when low writing pressure is applied by a user, a low duty cycle is set to generate gentle vibration; when high writing pressure is applied by a user, a high duty cycle is set to generate stronger vibration. Therefore, hierarchical regulation of the pressure detection signal improves the restoration degree of the active stylus to traditional pen and paper, thereby enhancing user experience.

In some embodiments, the active stylus further comprises a communication device;
characterized in that the communication device is configured to receive a speed detection signal sent by a function device, and the speed detection signal is configured to characterize a writing speed of the active stylus on the function device; and
the drive device is further configured to adjust the at least one drive signal according to the speed detection signal to adjust the vibration signal, the sound signal or a combination thereof, thereby adjusting the vibration effect, the sound effect or the vibration-sound combined effect.

The drive signal is adjusted by the active stylus according to the real-time writing speed of a user, so as to regulate the vibration effect of the motor device. The feedback of the active stylus is thereby enabled to match the current writing state in real time, which facilitates further improvement of the user experience of the active stylus.

In some embodiments, the active stylus further comprises a control unit; and the control unit is configured to control whether to output the at least one drive signal to the motor device according to the speed detection signal, so as to control whether the motor device generates the vibration signal, the sound signal or a combination thereof, thereby controlling whether to achieve the vibration effect, the sound effect or the vibration-sound combined effect.

In some embodiments, in response to a case that the speed detection signal is greater than a preset threshold, the control unit is configured to output the at least one drive signal to the motor device; or
in response to a case that the speed detection signal is less than or equal to the preset threshold, the control unit is configured to stop outputting the at least one drive signal to the motor device.

The regulation of the vibration signal is realized according to different writing speeds by detecting a speed detection signal. For example, when the function device detects that a speed detection signal is less than or equal to a preset threshold (e.g., 3 cm/s), the speed detection signal is low at this moment, which means the user pauses writing operations with the active stylus. Accordingly, the generation of the vibration signal by the motor device is stopped by the active stylus. Therefore, detecting the speed detection signal improves the accuracy of the feedback effect of the active stylus, so as to facilitate the enhancement of user experience.

In some embodiments, the communication device is further configured to receive a paper type signal sent by the function device; and
the drive device is further configured to adjust the at least one drive signal according to the paper type signal to adjust the vibration signal, the sound signal or a combination thereof, thereby controlling whether to realize the vibration effect, the sound effect or the vibration-sound combined effect.

In some embodiments, the control unit is configured to adjust output intervals of a plurality of drive sub-signals of each of the at least one drive signal in a time sequence according to the paper type signal, and the plurality of drive sub-signals are configured to drive the motor device in a time-sharing manner.

Through the above technical solution, the output intervals of the plurality of drive sub-signals of each of the at least one drive signal can be adjusted by the control unit. The plurality of drive sub-signals drive the motor device in the time-sharing manner to simulate different paper writing effects, thereby further enhancing the feedback effect of the vibration signal and improving the interaction authenticity and user experience of the active stylus.

In some embodiments, the drive device further comprises a filter unit, the filter unit is configured to allow a target drive sub-signal of each of the at least one drive signal in a frequency domain to pass through, and a frequency range of the target drive sub-signal is 150 Hz to 20 kHz.

In this application, the drive sub-signal with the target frequency band is obtained by filtering out drive signals with a low-frequency band and a high-frequency band by the motor device. The low-frequency band may be less than 150 Hz. By filtering out the drive signals with the low-frequency band, continuous vibration signals are achieved with reduced sense of discontinuity, and finer sound emitted by the motor device is obtained meanwhile. In addition, the high-frequency band may be greater than 20 kHz. Filtering out the drive signals with the high-frequency band facilitates improvement of vibration efficiency of the motor device and reduction of power consumption of the active stylus. High-frequency signals and low-frequency signals are filtered out by the filter unit to retain the drive sub-signal within the above target frequency band range. This not only enables the motor device to achieve both strong vibration effect and sound effect, but also helps reduce the power consumption of the active stylus.

In some embodiments, a resonant frequency of the motor device is located within the frequency range of the target drive sub-signal.

At the resonant frequency, the motor device delivers the highest vibration efficiency and can generate the strongest vibration feedback with minimal energy consumption. Therefore, the target frequency band is set to a resonant frequency band by the filter unit, such that the drive sub-signal close to or falling within the resonant frequency can be screened from the drive signals. This effectively reduces the energy loss and power consumption of the active stylus.

In some embodiments, the drive device comprises a storage unit and a digital-to-analog conversion unit; the storage unit is configured to store a PWM array obtained by processing the writing sound recording of the traditional pen; and the digital-to-analog conversion unit is configured to perform digital-to-analog conversion on the PWM array to obtain the at least one drive signal.

In some embodiments, processing of the writing sound recording includes at least one of denoising, trimming, splicing and sampling.

In some embodiments, the drive device comprises an audio processing unit; and the audio processing unit is configured to process the writing sound recording of the traditional pen to obtain the drive signal.

In some embodiments, the drive device is configured to provide a plurality of drive signals different from each other; the plurality of drive signals are configured to drive the motor device to correspondingly generate different vibration signals, different sound signals or a combination thereof, thereby achieving different vibration effects, different sound effects or different vibration-sound combined effects

In some embodiments, the different vibration effects, the different sound effects or the different vibration-sound combined effects correspond to different brush types of the active stylus.

In this application, corresponding vibration signals, sound signals and a combination thereof are set according to different brush types, which improves the restoration accuracy of the active stylus for different brush types, thereby enhancing user experience.

In some embodiments, the motor device comprises a linear motor. The linear motor has advantages such as fast response speed, delicate vibration and low power consumption, and thus is preferably applied to an active stylus to provide accurate and rapid feedback response for users.

In a second aspect, this application provides a method for controlling an active stylus, comprising:
acquiring body simulation information and operation attribute information of the active stylus;
selecting at least one target waveform from a waveform set according to the body simulation information; and
controlling a motor device of the active stylus to perform a vibration operation according to the operation attribute information and the at least one target waveform, so that the motor device generates a vibration effect, a sound effect or a combination thereof corresponding to the operation attribute information and the body simulation information.

In some embodiments, the body simulation information comprises brush type; and
the step of selecting at least one target waveform from a waveform set according to the body simulation information comprises:
selecting the at least one target waveform from the waveform set according to the brush type and a target simulation mode; wherein the target simulation mode comprises a sound simulation mode, a vibration simulation mode or a combination thereof.

In some embodiments, the step of selecting the at least one target waveform from the waveform set according to the brush type and the target simulation mode comprises:
selecting a target waveform subset from a plurality of candidate waveform subsets contained in the waveform set according to the brush type; wherein each of the plurality of candidate waveform subsets comprises a vibration waveform group and a sound waveform group, the vibration waveform group comprises two or more vibration waveforms, and the sound waveform group comprises two or more sound waveforms;
selecting a target waveform group from the vibration waveform group and the sound waveform group of the target waveform subset according to the target simulation mode; and
selecting the at least one target waveform from the target waveform group according to the operation attribute information.

In some embodiments, in a case where the target simulation mode comprises the sound simulation mode and the vibration simulation mode, the at least one target waveform comprises at least one first waveform and at least one second waveform; and
the at least one first waveform is a vibration waveform selected from the vibration waveform group of the target waveform subset according to the operation attribute information; and the at least one second waveform is a sound waveform selected from the sound waveform group of the target waveform subset according to the operation attribute information.

In some embodiments, in a case where the number of the at least one first waveform is at least two, and the number of the at least one second waveform is at least two, the step of controlling the motor device to perform the vibration operation according to the operation attribute information and the at least one target waveform comprises:
determining a proportion of each of at least two first waveforms and a proportion of each of at least two second waveforms according to the operation attribute information;
determining a target vibration waveform according to the at least two first waveforms and the proportion of each of the at least two first waveforms;
determining a target sound waveform according to the at least two second waveforms and the proportion of each of the at least two second waveforms; and
controlling the motor device to perform the vibration operation according to the target vibration waveform and the target sound waveform.

In some embodiments, the step of determining the proportion of each of the at least two first waveforms and the proportion of each of the at least two second waveforms according to the operation attribute information comprises:
determining writing operation parameters according to writing speed information, writing pressure information or a combination thereof in the operation attribute information; and
determining the proportion of each of the at least two first waveforms and the proportion of each of the at least two second waveforms according to the writing operation parameters;
characterized in that the writing pressure information is a pressure detection signal output by a pressure detection device of the active stylus.

In some embodiments, the step of controlling the motor device to perform the vibration operation according to the target vibration waveform and the target sound waveform comprises:
generating a composite waveform according to the target vibration waveform and the target sound waveform;
generating a drive signal according to a pulse-width modulation (PWM) carrier and the composite waveform; and
controlling the motor device to perform the vibration operation according to the drive signal.

Compared to the prior art, the present disclosure has the following beneficial effects.

For the method for controlling the active stylus provided by the present application, the body simulation information and operation attribute information of the active stylus are acquired. At least one target waveform is selected from a waveform set according to the body simulation information. A motor device of the active stylus is controlled to perform a vibration operation according to the operation attribute information and the at least one target waveform, so that the motor device generates a vibration effect, a sound effect or a vibration-sound combined effect corresponding to the operation attribute information and the body simulation information. Compared with conventional active styluses that require an additional speaker to simulate a real writing feel, the present application only needs to determine a target waveform according to body simulation information, and then control the motor device to perform the vibration operation according to the operation attribute information and the target waveform, thereby realizing the simulation of the vibration effect, the sound effect or the vibration-sound combined effect. This not only effectively saves the internal space of the active stylus, but also allows users to flexibly select writing effects according to personal needs. Meanwhile, controlling the motor device according to the target waveform enables synchronous coordination of vibration and sound, thus avoiding feedback delay or misalignment. This makes writing interaction more natural and coherent, better meeting the demands of emerging scenarios such as paperless office and electronic education with a wide range of applications.

### BRIEF DESCRIPTION OF THE DRAWINGS

Fig. 1 is a structural diagram of an active stylus in accordance with an embodiment of the present disclosure;
Fig. 2 is a structural diagram of an active stylus in accordance with another embodiment of the present disclosure;
Fig. 3 is a flow chart of audio signal processing in accordance with an embodiment of the present disclosure;
Fig. 4 is a structural diagram of an active stylus in accordance with another embodiment of the present disclosure;
Fig. 5 is a structural diagram of an active stylus in accordance with another embodiment of the present disclosure;
Fig. 6 is a structural diagram of an active stylus in accordance with another embodiment of the present disclosure;
Fig. 7 is a structural diagram of an interactive system in accordance with an embodiment of the present disclosure;
Fig. 8 is a structural diagram of an active stylus in accordance with another embodiment of the present disclosure;
Fig. 9 is a structural diagram of an active stylus in accordance with another embodiment of the present disclosure;
Fig. 10 is a flow chart of an active stylus driving an X-axis linear motor to generate a vibration signal and a sound signal in accordance with an embodiment of the present disclosure;
Fig. 11 schematically shows application environment of an active stylus control method in accordance with an embodiment of the present disclosure;
Fig. 12 is a flow chart of an active stylus control method in accordance with an embodiment of the present disclosure;
Fig. 13 is a flow chart of selecting at least one target waveform from a target waveform group in accordance with an embodiment of the present disclosure;
Fig. 14 is a flow chart of controlling a motor device of the active stylus to perform a vibration operation in accordance with an embodiment of the present disclosure;
Fig. 15 is a flow chart of generating a drive signal in accordance with an embodiment of the present disclosure; and
Fig. 16 is a flow chart of an active stylus control method in accordance with another embodiment of the present disclosure.

### DETAILED DESCRIPTION OF EMBODIMENTS

The technical solutions of the present application will be described below with reference to the accompanying drawings.

In the description of the embodiments of the present application, unless otherwise stated, the character "/" means "or". For example, A/B may represent A or B. As used herein, "and/or" is merely an association relationship describing associated objects, indicating that three relationships may exist. For example, "A and/or B" includes the following three cases: A alone exists, both A and B exist, and B alone exists.

In the embodiments of this application, the terms "first", "second", etc. are only descriptive, and cannot be understood as indicating or implying relative importance or implicitly indicating the number of indicated technical features. Therefore, features defined by "first", "second", etc., may explicitly or implicitly include one or more of the features. In addition, in the description of this application, "a plurality of" means at least two, and "at least one" and "one or more" mean one, two or more than two. The singular expressions "a", "an", "said", "the above", "the" and "this" are intended to include the expression such as "one or more" as well, unless otherwise clearly indicated.

In the description of this application, terms "an embodiment" and "some embodiments" mean that a particular feature, structure, or characteristic described in connection with the embodiment is included in one or more embodiments of the present application. Thus, the phrases "in an embodiment", "in some embodiments", "in some other embodiments", "in certain other embodiments" etc., appearing in different parts of this specification do not necessarily refer to the same embodiment, but rather mean "one or more, but not all, embodiments", unless otherwise specifically emphasized. The terms "comprise", "include", "have" and variations thereof mean "include but not limited to", unless otherwise specifically emphasized.

With the widespread adoption of tablets, touchpads, and other devices, users' demands for digital writing experiences have been increasingly raised, including the need for active styluses to simulate a real writing feel. Specifically, users expect electronic writing tools to not only replace traditional pen and paper but also retain the authentic writing experience, especially in scenarios such as note-taking, drawing and signing. This requires restoring the natural interactive experience of traditional pen and paper through technical means, allowing users to have an experience similar to traditional writing on electronic devices. Meanwhile, the rapid development of emerging scenarios such as paperless offices and electronic education further requires active styluses to achieve seamless integration with traditional tools in terms of functionality and experience, so as to meet users' demands for an efficient and natural writing experience.

However, current active styluses offer a poor degree of restoration of the traditional pen-and-paper interaction experience. For example, in terms of simulating the sound and vibration feedback during writing, the existing active styluses struggle to reproduce the realistic feedback generated by the friction between traditional paper and pen tip, resulting in a significant discrepancy from the actual writing experience.

Some improved solutions adopt a motor to provide haptic feedback and a speaker or buzzer to provide audible feedback. However, this approach not only increases the occupied space of the active stylus, but may also affect the power consumption of the active stylus, thereby impairing the overall performance and user experience of the active stylus.

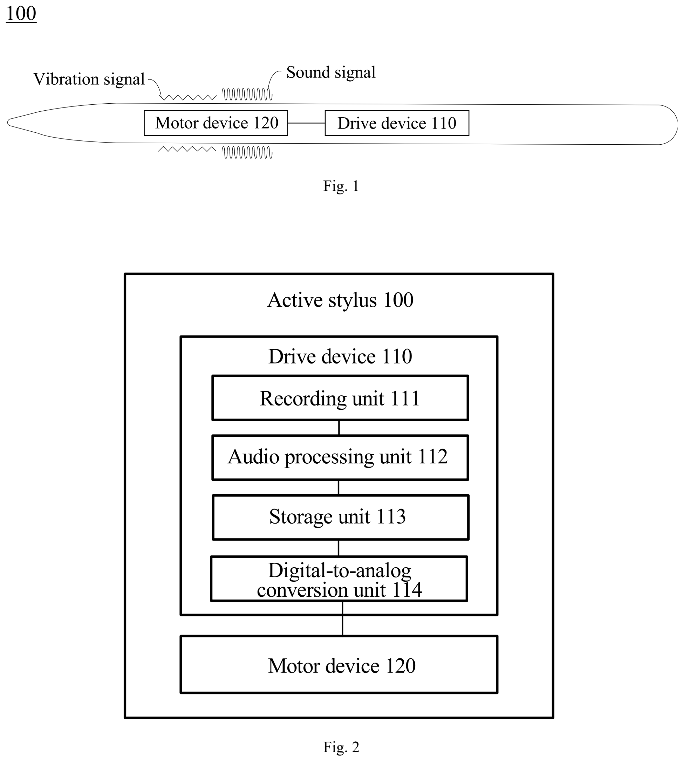

In view of this, this application provides an active stylus, as shown in Fig. 1.

Referring to Fig. 1, the active stylus 100 includes a drive device 110 and a motor device 120. The drive device 110 is configured to provide a drive signal. The drive signal includes a signal obtained by processing writing sound recording of a traditional pen. The motor device 120 is configured to receive the drive signal. The drive signal is configured to drive the motor device 120 to generate a vibration signal, a sound signal or a combination thereof to achieve a vibration effect, a sound effect or a vibration-sound combined effect of the active stylus 100. The vibration signal and the sound signal are configured to characterize a brush type of the active stylus 100.

The technical solution of this application adopts a drive signal corresponding to the writing sound recording of a traditional pen to drive a motor device to vibrate and emit sound. The vibration signal can simulate the haptic sensation during traditional writing, and the sound signal can restore the friction sound during traditional writing. This improves the restoration degree of the active stylus 100 to traditional pen and paper, thereby enhancing the interactivity and user experience of the active stylus 100. Meanwhile, the same motor device is employed to vibrate and generate sound at the same time simultaneously, without the need for an independent sound generating device such as a speaker for sound generation, which can save the internal space of the active stylus 100 and reduce the overall power consumption of the active stylus 100.

In the embodiment of the present application, the "traditional pen" refers to a traditional writing tool distinct from an electronic pen. The type of the traditional pen may include at least one of a pencil, a marker, a fountain pen, a ballpoint pen, a calligraphy brush, a crayon, a watercolor pen, etc., which is not specifically limited herein.

In some embodiments, the drive device 110 of the active stylus 100 may include a recording unit 111, which can record the writing process of a traditional pen on paper, so as to generate an audio signal of the writing sound recording of the at least one type of traditional pen. In other embodiments, in order to save internal space, the active stylus 100 may not include the recording unit 111, but instead directly obtains the audio signal from an external recording unit. The active stylus 100 may include a storage unit 113 for storing the audio signal. In still other embodiments, the recorded audio signal can be processed by relevant signal processing to generate a digital signal convenient for storage, and the storage unit 113 in the active stylus 100 can be used to store the digital signal.

Fig. 2 shows a structural diagram of another active stylus 100 provided in an embodiment of this application.

As shown in Fig. 2, the drive device 110 may include a recording unit 111, an audio processing unit 112, a storage unit 113 and a digital-to-analog conversion unit 114. The recording unit 111 may include a recorder, which can record the writing sound of the traditional pen to obtain an audio signal. The audio signal can be processed by the subsequent audio processing unit 112 to improve the quality, which facilitates subsequent formation of a drive signal for driving the motor device 120.

In an embodiment, the audio processing unit 112 can perform at least one of the following processing on the audio signal: denoising, trimming, splicing or sampling.

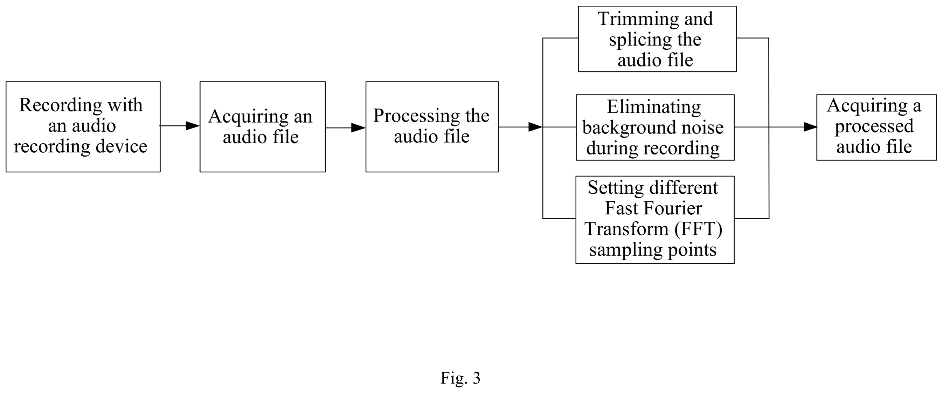

Fig. 3 shows a flow chart of audio signal processing provided in an embodiment of this application.

As shown in Fig. 3, after sound effects of different types of traditional pens during writing are recorded by a recording device, the audio file is then processed. Background noise during recording is first eliminated, i.e., denoising. In this process, denoising can remove abnormally prominent sound parts from the audio, thus reducing the abrupt noise generated when driving the motor. Therefore, denoising enables the sound emitted by the active stylus 100 to be purer and more natural when simulating writing with the traditional pen and paper, which can enhance the smoothness of writing and the user experience, thereby improving the restoration degree of the active stylus 100 to traditional writing actions.

Trimming and splicing can enhance the continuity of the writing sound. During recording, unnatural pauses may occur in the sound due to equipment limitations or improper operations, thus affecting the fluency of the writing sound. Trimming and splicing can remove these unnecessary pauses by editing the recording segments, enabling smooth transition of the brush sound without any breakage. Therefore, trimming and splicing improves the continuity of the sound and enhances the realism of the active stylus 100 in simulating traditional writing.

Sampling can adjust the delicacy and expressiveness of sound. Specifically, sampling can capture and reproduce subtle changes in sound during writing by adjusting parameters such as sampling rate and the number of sampling points. For example, the sampling parameters of a fast Fourier transform (FFT) can be set to adjust the detail performance and delicacy of the audio. More FFT sampling points result in richer audio details, which is suitable for pencils, markers and other writing instruments that require more obvious vibrations and granularity. Therefore, the sampling enables the active stylus 100 to achieve greater accuracy in restoring the sound characteristics of traditional writing tools.

In the technical solution of this application, the recording unit 111 and the audio processing unit 112 are added to the active stylus 100, so that the active stylus 100 can autonomously implement audio recording and generation of the motor drive signal, expanding the simulation scenarios of the active stylus 100. The audio processing unit 112 not only improves the use flexibility of the active stylus 100, but also enriches the diversity of the writing experience.

Referring to Fig. 2, the storage unit 113 can be connected to audio processing unit 112. After processing the audio file/audio signal, audio processing unit 112 can generate a digital signal convenient for store, such as a pulse-width modulation (PWM) array corresponding to a PWM wave signal. The storage unit 113 is, for example, a memory, which may include a volatile memory, a non-volatile memory, or a combination thereof. The non-volatile memory can be a read-only memory (ROM), a programmable read-only memory (PROM), an erasable programmable read-only memory (EPROM), an electrically erasable programmable read-only memory (EEPROM) or a flash memory. The volatile memory can be a random-access memory (RAM) used as an external high-speed cache memory, which is not specifically limited herein.

The digital-to-analog conversion unit 114 is connected to the storage unit 113, and may include, for example, a digital-to-analog converter (DAC). The digital signal stored in the storage unit 113 is converted by the digital-to-analog conversion unit 114 to generate a drive signal for driving the motor device 120. The drive signal may include, for example, a PWM wave signal.

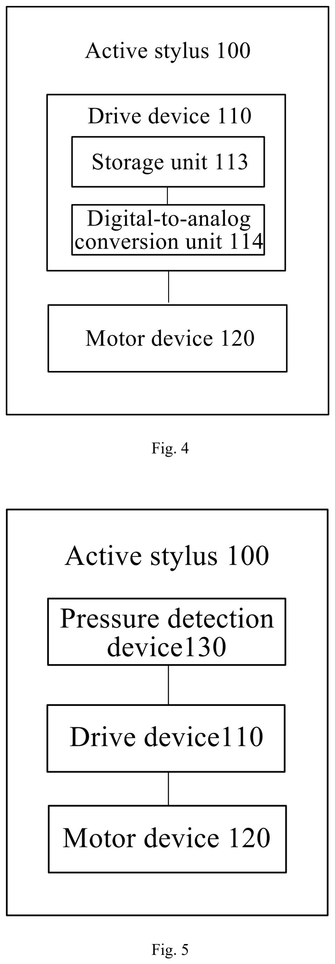

Fig. 4 shows a structural diagram of another active stylus 100 provided in an embodiment of this application.

As shown in Fig. 4, in the active stylus 100, the drive device 110 may include a storage unit 113 and a digital-to-analog conversion unit 114. The storage unit 113 can be configured to store an original audio signal recorded by an external recording device, or can be configured to store an audio signal obtained by processing the original audio signal. The process of processing the original audio signal can be found in the relevant description of the embodiment shown in Fig. 3, and will not be elaborated here.

In the technical solution of this embodiment, the active stylus 100 does not need any built-in recording unit and audio processing unit, which helps save the internal space and reduce system complexity. The active stylus 100 can quickly drive the motor device 120 to generate the vibration signal and the sound signal corresponding to traditional pen recordings through the signals stored in the storage unit 113, thereby increasing the generation speed of the vibration signal and the sound signal.

In some embodiments, a plurality of different drive signals can be obtained by acquiring writing sound recordings of different traditional pens on paper. The plurality of different drive signals are configured to drive the motor device 120 to generate different vibration signals, different sound signals or a combination thereof. In an embodiment, the different vibration signals, the different sound signals or the combination thereof may correspond to different brush types of the active stylus 100. The brush type may correspond to the type of the traditional pen, such as a pencil, a marker, a fountain pen, a ballpoint pen, a calligraphy brush, a crayon and a watercolor pen. Additionally, different vibration signals, different sound signals or the combination thereof may also correspond to different types of writing media, such as a writing paper, a cardstock and a blackboard, which are not specifically limited in this embodiment.

During application, a user can input the brush type of the active stylus 100 into a function device 200. Then, the function device 200 can send information of the brush type to the active stylus 100. The active stylus 100 invokes a corresponding drive signal from the storage unit 113 according to the brush type, so as to drive the motor device 120 to vibrate and generate sound. The brush type is consistent with the traditional pen represented by the recording signal corresponding to the drive signal.

In this embodiment, different drive signals can be selected and invoked according to different brush types to drive the motor device 120 to generate different vibration signals, different sound signals or a combination thereof. This improves the restoration degree of the active stylus 100 to various traditional brush types, thereby further enhancing the user experience.

In some embodiments, after selecting a certain brush type, the active stylus 100 can adjust the drive signal of the motor device 120 according to a user's real-time writing status (such as stylus tip pressure and writing speed), thereby adjusting the vibration effect and sound effect of the motor device 120. Such arrangement enables the feedback of the active stylus 100 to match a current writing status in real time, which facilitates further improvement of the user experience of the active stylus 100.

Fig. 5 is a structural diagram of another active stylus 100 provided in an embodiment of this application.

As shown in Fig. 5, in addition to the drive device 110 and the motor device 120, the active stylus 100 further includes a pressure detection device 130, which can be configured to detect a stylus tip pressure of the active stylus 100 to generate a pressure detection signal.

For example, the pressure detection device 130 may include a pressure sensor that is configured to detect a pressure applied to the stylus tip when a user writes with the active stylus 100, so as to generate the pressure detection signal. The pressure detection signal can control the drive signal, thereby further regulating the haptic and sound feedback of the motor device 120.

In some embodiments, the drive device 110 can adjust the amplitude, the duty cycle or a combination thereof of the drive signal according to the pressure detection signal to adjust the vibration signal, the sound signal or a combination thereof of the motor device 120, thereby adjusting the vibration effect, the sound effect or the vibration-sound combined effect.

In some embodiments, the drive signal provided by the drive device 110 includes a PWM wave signal. The drive device 110 may include a duty cycle adjustment unit 115, which is configured to adjust the duty cycle of the PWM wave signal according to the pressure detection signal detected by the pressure detection device 130 to adjust the vibration signal, the sound signal or the combination thereof, thereby adjusting the vibration effect, the sound effect or the vibration-sound combined effect.

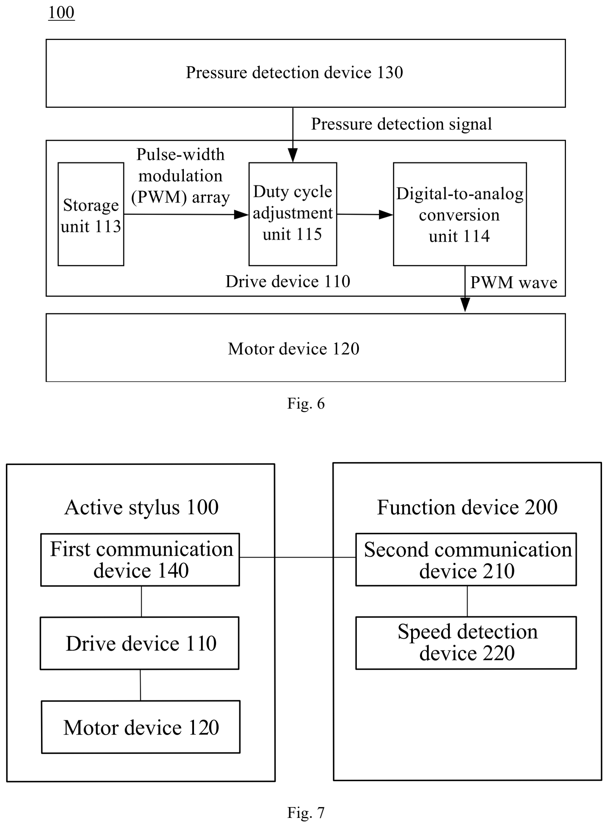

Fig. 6 is a structural diagram of another active stylus 100 provided in an embodiment of this application.

As shown in Fig. 6, in the active stylus 100, the drive device 110 may include the storage unit 113, the duty cycle adjustment unit 115 and the digital-to-analog conversion unit 114. The storage unit 113 can store a PWM array corresponding to a recording signal. The duty cycle adjustment unit 115 can adjust the duty cycle of the PWM array. The adjusted PWM array is input to the digital-to-analog conversion unit 114 and subjected to digital-to-analog conversion to obtain a PWM wave signal, which drives the motor device 120 to generate the vibration signal, the sound signal or the combination thereof, thereby presenting the vibration effect, the sound effect or the vibration-sound combined effect.

In an embodiment, as shown in Fig. 6, the duty cycle adjustment unit 115 is located between the storage unit 113 and the digital-to-analog conversion unit 114. The duty cycle adjustment unit 115 can adjust the duty cycle of the PWM array (i.e., the digital signal). In other embodiments, the sequence of the duty cycle adjustment unit 115 and the digital-to-analog conversion unit 114 in the drive device 110 can be exchanged, that is, the PWM array stored in the storage unit 113 can be sent to the digital-to-analog conversion unit 114 first for digital-to-analog conversion to generate a PWM wave, and then the duty cycle adjustment unit 115 adjusts the duty cycle of the PWM wave (i.e., the analog signal).

In an embodiment, the vibration intensity of the motor device 120 can be positively correlated with the pressure detection signal. For example, the larger the pressure detection signal, the larger the duty cycle of the PWM wave signal used to drive the motor device 120.

In some embodiments, in response to a case that the pressure detection signal is within a first preset pressure range, the duty cycle adjustment unit 115 is configured to adjust the duty cycle of the PWM wave signal to a first preset value. In response to a case that the pressure detection signal is within a second preset pressure range, the duty cycle adjustment unit 115 is configured to adjust the duty cycle of the PWM wave signal to a second preset value. An upper limit of the first preset pressure range is less than a lower limit of the second preset pressure range, and the first preset value is less than the second preset value. For example, in response to a case that the pressure detection signal is between 10 g and 400 g, the duty cycle of the PWM wave signal can be adjusted to the first preset value; and in response to a case that the pressure detection signal is greater than 400 g, the duty cycle of the PWM wave signal can be adjusted to the second preset value, which is greater than the first preset value. The setting of the first preset value and the second preset value can be related to the hardware and driving method of the motor device 120, which is not specifically limited in the embodiments.

In the embodiments of the present application, the duty cycle of the drive signal adjusted correspondingly by detecting the magnitude of the pressure detection signal, so as to realize the regulation and control of the vibration signal, the sound signal or the combination thereof of the motor device 120. For example, a lower duty cycle results in gentle vibration, sound or a combination thereof when the user's writing pressure is low; and a higher duty cycle results in stronger vibration feedback, sound feedback or a combination thereof when the user's writing pressure is high. Therefore, the graded regulation and control of the pressure detection signal facilitate improvement of the restoration degree of the active stylus 100 to traditional pen and paper, thereby enhancing the user experience.

In some embodiments, in addition to the drive device 110, the motor device 120 and pressure detection device 130, the active stylus 100 further includes a first communication device 140. The first communication device 140 may include Bluetooth, Bluetooth Low Energy (BLE), radio frequency (RF), electromagnetic induction, ultrasonic waves, etc., which is not limited thereto.

Fig. 7 is a structural diagram of an interactive system provided in an embodiment of this application. As shown in Fig. 7, the interactive system includes an active stylus 100 and a function device 200. The first communication device 140 is configured to connect with a second communication device 210 of the function device 200. The function device 200 includes a speed detection device 220 configured to detect a writing speed of the active stylus 100 on the function device 200 to obtain a speed detection signal. The second communication device 210 can send the speed detection signal to the first communication device 140.

In some application scenarios, the function device 200 is a display device.

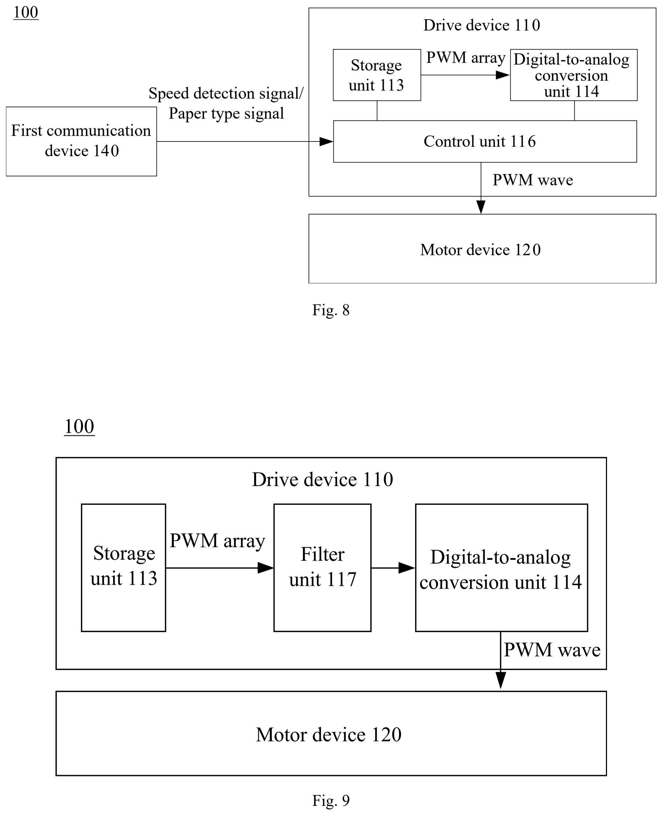

Fig. 8 is a structural diagram of another active stylus 100 provided in an embodiment of this application. As shown in Fig. 8, the drive device 110 includes a control unit 116. The first communication device 140 can receive the speed detection signal sent by the function device 200 and send the speed detection signal to the control unit 116. The control unit 116 is configured to control whether to output a PWM wave signal to the motor device 120 according to the speed detection signal. The control unit 116 may include, for example, a control circuit or a control chip such as a processor, a controller and a microcontroller, which is not limited thereto.

In some embodiments, the control unit 116 can acquire the PWM wave signal converted by the analog-to-digital conversion unit 114 and control whether to send the PWM wave signal to the motor device 120 according to the speed detection signal. In some examples, in response to a case that the speed detection signal is greater than a preset threshold (e.g. 3 cm/s), the control unit 116 is configured to output the PWM wave signal to the motor device 120; and in response to a case that the speed detection signal is less than or equal to the preset threshold, the control unit 116 is configured to stop outputting the PWM wave signal to the motor device 120.

Detection of the speed detection signal enables regulation of the vibration signal and sound signal of the motor device 120 according to different writing speeds. For example, in a case where the function device 200 detects that the speed detection signal is less than or equal to the preset threshold, meaning the speed detection signal is relatively small (e.g., the user pauses writing with the active stylus 100), the active stylus 100 stops the motor device 120 from generating the vibration signal and the sound signal. Therefore, detection of the speed detection signal improves the accuracy of the feedback effect of the active stylus 100, thereby enhancing the user experience.

In some embodiments, the first communication device 140 can also be configured to receive a paper type signal sent by the function device 200. As shown in Fig. 8, the first communication device 140 receives the paper type signal sent by the function device 200 and then transmits the paper type signal to the control unit 116. The paper type signal is configured to characterize a paper type selected by the user on the function device 200 and corresponds to traditional paper types, including printing paper, watercolor paper, sketching paper, rice paper, frosted paper, carbon paper, kraft paper, etc., which are not limited in this application.

In the above embodiment, the control unit 116 can also be configured to adjust output intervals of a plurality of drive sub-signals of the drive signal in a time sequence according to the paper type signal received by the active stylus 100. The plurality of sub-signals are configured to drive the motor device 120 in a time-sharing manner. For example, for relatively smooth paper types such as printing paper and carbon paper, a relatively short output interval is set to increase the vibration frequency of the tip, thereby simulating the fluency of smooth paper. For relatively rough paper types such as sketch paper and frosted paper, a relatively long output interval is set to reduce the vibration frequency of the tip, thereby simulating the friction of rough paper.

Through the technical solution of the embodiment, the control unit 116 can adjust the output intervals of the plurality of drive sub-signals. The plurality of drive sub-signals drive the motor device 120 in the time-sharing manner to simulate writing effects on different papers, thereby further improving the feedback effect of the vibration signal and enhancing the interactive realism and user experience of the active stylus 100.

In order to further improve the driving effect of the drive signal on the motor device 120, in some embodiments, the drive device 110 further includes a filter unit 117 configured to filter the drive signal.

Fig. 9 is a structural diagram of another active stylus 100 provided in an embodiment of this application. As shown in Fig. 9, the filter unit 117 can be connected between the storage unit 113 and the digital-to-analog conversion unit 114. The filter unit 117 is configured to allow a target drive sub-signal in a frequency domain of the drive signal to pass through and filter out drive sub-signals of other frequencies. A frequency range (i.e., the target frequency band) of the target drive sub-signal is 150 Hz to 20 kHz.

In an embodiment, in a case where the filter unit 117 is configured to process the digital signal stored in the storage unit 113, the filter unit 117 may include a digital filter. Alternatively, the filter unit 117 may also be connected after the digital-to-analog conversion unit 114 to process the analog signal, and the filter unit 117 may include a bandpass filter, a low-pass filter, a high-pass filter, a band-stop filter, etc., which is not limited in the present application.

In the embodiments of this application, the motor device 120 obtains a drive sub-signal in the target frequency band by filtering out drive signals in the low-frequency band and high-frequency band. The low-frequency band may be lower than 150 Hz. Filtering out the drive signals in the low-frequency band can make the vibration signal coherent, reduce a sense of pause, and make the sound emitted by the motor device 120 finer. Furthermore, the high-frequency band may be higher than 20 kHz. Filtering out the drive signals in the high-frequency band is conductive to increase the vibration efficiency of the motor device 120 and save energy consumption of the active stylus 100. The filter unit 117 filters out high-frequency and low-frequency signals to retain drive sub-signals within the target frequency range. This not only enables the motor device 120 to achieve both strong vibration and sound effects but also reduces the energy consumption of the active stylus 100.

In some embodiments, the resonant frequency of the motor device 120 is located within the above target frequency band.

At the resonant frequency, the motor device 120 exhibits the highest vibration efficiency, generating the strongest vibration feedback with minimal energy consumption. Therefore, by setting the target frequency band of the filter unit 117 to cover the resonant frequency band, drive sub-signals close to or at the resonant frequency can be screened from the plurality of drive signals, thereby effectively reducing the energy loss and power consumption of the active stylus 100.

In some embodiments, the drive signal provided to the motor device 120 may include a complementary PWM wave signal that is complementary to the PWM wave signal. The PWM wave signal and the complementary PWM wave signal with opposite phases can drive an H-bridge circuit in the motor device 120. The H-bridge circuit can control the forward and reverse rotation of a direct current (DC) motor in the motor device 120 and achieve bidirectional current flow. Adopting a combination of the PWM wave signal and the complementary PWM wave signal in the drive signal ensures that only one direction of current flows through switches in the H-bridge circuit at any time, which results in improved efficiency and reduced energy loss.

In an embodiment, the motor device 120 may include a linear motor, such as an X-axis linear motor and a Z-axis linear motor. Such linear motors has advantages such as fast response speed, delicate vibration and low power consumption, enabling them to be suitably applied in active styluses to provide users with precise and rapid feedback response.

In some embodiments, the X-axis linear motor can electromagnetically drive a mass block to reciprocate along a specific direction, so as to generate vibration and sound feedback. The X-axis refers to a linear vibration direction of the electromagnetically driven mass block. In some embodiments, the X-axis may be parallel to an axial direction of a shaft of the active stylus 100, i.e., along a length direction of the active stylus 100. When the X-axis linear motor receives a drive signal, the electromagnetic coil generates an alternating magnetic field to drive the mass block to vibrate. Such vibration is transmitted to a grip area of the active stylus 100 through the motor housing, thus generating haptic feedback. Meanwhile, by adjusting the amplitude and pulse interval of the drive signal, the X-axis linear motor can generate high-frequency vibration, which is transmitted from the stylus body into the air to generate an audible sound for the user, such as a sound simulating a traditional pen tip rubbing against paper.

In an embodiment, the X-axis linear motor is disposed in the middle of the stylus body or near the user's grip area, which facilitates the effective transmission of the vibration signal and the sound signal to the user's hand. Since the X-axis linear motor has directional vibration characteristics, and the vibration direction is consistent with the axis of the stylus body, it can provide high-precision vibration feedback, thus offering a more realistic writing experience.

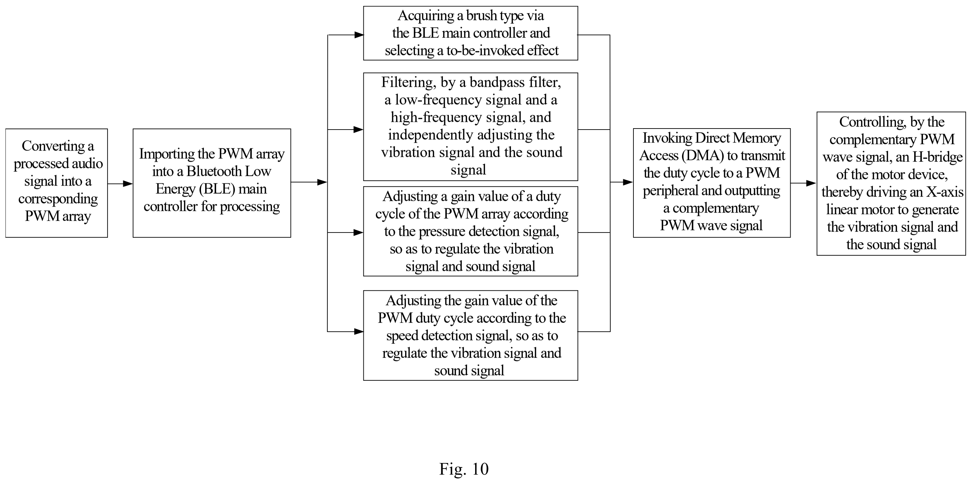

Fig. 10 is a flow chart of the active stylus 100 driving the X-axis linear motor to generate the vibration signal and the sound signal according to an embodiment of this application.

As shown in Fig. 10, a recording signal from a traditional pen is processed to generate an audio signal. The audio signal can be converted into a corresponding PWM array, which is then imported into a BLE main controller of the active stylus 100 for processing. In an embodiment, the BLE can be provided with a storage module, such as a flash memory. The PWM array can be passed to the flash memory for the active stylus 100 to invoke.

In some embodiments, a function device 200 (such as a display device) configured to cooperate with the active stylus 100 can set different brush types for the active stylus 100. The active stylus 100 can acquire the brush type via BLE, and switch between different vibration and sound feedback effects produced by the motor device 120 by selecting different PWM arrays stored in flash memory.

In another embodiment, the BLE main controller can use a bandpass filter to filter low-frequency and high-frequency signals of the PWM array, thereby adjusting the vibration signal and the sound signal of the motor device 120.

Furthermore, the BLE main controller can also obtain the pressure detection signal, the speed detection signal or the combination thereof, and adjust a gain value of the duty cycle of the PWM array according to the pressure detection signal, the speed detection signal or the combination thereof, so as to regulate the vibration signal and sound signal.

In the above embodiments, Direct Memory Access (DMA) can be invoked to transmit the PWM array to a PWM peripheral and output a complementary PWM wave signal. The complementary PWM wave signal is configured to control the H-bridge of the X-axis linear motor, thereby driving the X-axis linear motor to generate the vibration signal and the sound signal.

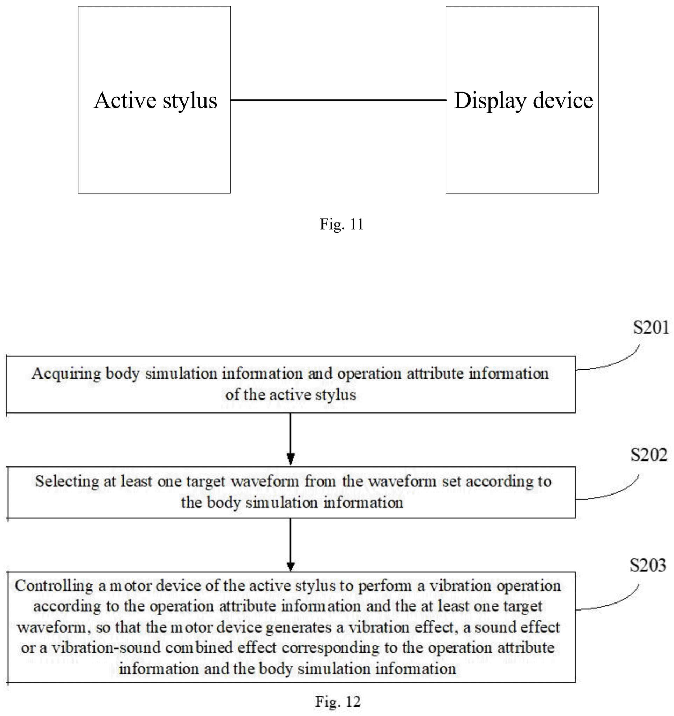

In an embodiment, a method for controlling the above active stylus 100 is provided, applicable to the application environment shown in Fig. 11. A controller of the active stylus 100 acquires body simulation information and operation attribute information of the active stylus 100. At least one target waveform is selected from a waveform set according to the body simulation information. A motor device 120 of the active stylus 100 is controlled to perform a vibration operation according to the operation attribute information and the at least one target waveform, so that the motor device 120 generates a vibration effect, a sound effect or a vibration-sound combined effect corresponding to the operation attribute information and the body simulation information.

In an embodiment, the display device (i.e., the above function device 200) is an electronic device having a touch screen. The touch screen is configured to receive input from the active stylus 100. A communication link is established between the display device and the active stylus 100.

In one embodiment, as shown in Fig. 12, a method for controlling the active stylus 100 is provided, which takes the application of the method to the controller of the active stylus 100 in Fig. 11 as an example. The method includes the following steps.

Step (S201) The body simulation information and the operation attribute information of the active stylus 100 is acquired.

The body simulation information refers to simulation information related to the active stylus body, including but not limited to brush type, paper type and stylus tip size. The brush type includes but is not limited to a pencil, a fountain pen, a calligraphy brush and a marker. The operation attribute information refers to operation-related information for the active stylus 100, including at least one of writing speed information, writing pressure information and writing posture information. The writing posture information includes tilt angle and azimuth angle.

In an embodiment, the active stylus 100 can acquire the body simulation information by receiving user configuration information carrying the body simulation information sent by the display device.

In this embodiment, another optional implementation method for acquiring the body simulation information is that an information query request is sent by the active stylus 100 to the display device, so that the body simulation information is fed back to the active stylus 100 by the display device upon reception of the information query request.

In an embodiment, in a case where the operation attribute information includes the writing speed information, an optional implementation method for acquiring the writing speed information is that the writing speed information is collected by the display device in real time and sent to the active stylus 100 by the display device in real time or periodically.

In an embodiment, in the case where the operation attribute information includes the writing speed information, another optional implementation for acquiring the writing speed information is that the information query request is sent by the active stylus 100 to the display device, so that the writing speed information n is fed back to the active stylus 100 by the display device upon reception of the information query request.

In an embodiment, in the case where the operation attribute information includes the writing speed information, yet another optional implementation for acquiring the writing speed information is that detection information of a detection module disposed on the active stylus 100 is required, and a writing speed of the active stylus 100 is obtained according to the detection information. The detection module can be a gyroscope sensor or an accelerometer sensor.

In an embodiment, in the case where the operation attribute information includes the writing pressure information, an optional implementation for acquiring the writing pressure information is that pressure detection information sent by the display device is received, where the pressure detection information includes the writing pressure information. The pressure detection information can be obtained by a pressure sensor configured on the display screen of the display device.

In an embodiment, in the case where the operation attribute information includes the writing pressure information, another optional implementation for obtaining the writing pressure information is that the active stylus 100 can be provided with a pressure detection device 130 to detect the writing pressure information in real time or periodically based on a configured pressure detection logic to generate a pressure detection signal. The pressure detection logic can be a piezoelectric detection method, a resistive detection method, a capacitive detection method or an inductive detection method.

In an embodiment, communication between the active stylus 100 and the display device can be performed through their respective configured communication modules. The communication modules can be a wired communication module or a wireless communication module. Types of the wireless communication module include, but are not limited to, a BLE communication module.

Step (S202) At least one target waveform is selected from the waveform set according to the body simulation information.

The target waveform refers to a waveform that can match the body simulation information. Among the at least one target waveform, frequency bands of different target waveforms can be completely the same. For example, taking the body simulation information as the brush type, for two different brush types, the corresponding target waveforms are different, but the frequency bands of these two target waveforms can both be 20 Hz to 20 kHz. The frequency bands of different target waveforms can also be different. Specifically, the different frequency bands can be completely different, i.e., with no overlap, such as two frequency bands of 20 Hz to 1 kHz and 2 kHz to 20 kHz respectively; or can be partially different, i.e., with overlap, such two frequency bands of 20 Hz to 10 kHz and 50 Hz to 16 kHz respectively.

In an embodiment, audio information corresponding to various types of body simulation information is acquired in advance according to the various types of body simulation information, and waveforms corresponding to the body simulation information are obtained according to the audio information. Taking the body simulation information as the brush type as an example, an optional implementation method for acquiring waveforms corresponding to different brush types is that sound effects of writing with different types of brushes are recorded by using professional recording equipment, and then the recorded files are processed. For audio files obtained by the audio processing tools, background noise in the recorded files is first eliminated, mainly by removing abnormally prominent sound parts in the recorded files, so as to prevent abrupt noise when driving the motor device 120. The recording files are trimmed and spliced to ensure that the sounds of different brushes are coherent and that there are no incoherent pauses caused by the recording equipment. Different FFT sampling parameters are set for the recordings to adjust the delicacy of the sound. The more FFT sampling points, the richer the audio details are, which is suitable for effects requiring more obvious vibration and granularity, such as pencils and markers. The processed audio files are converted into waveforms by a professional software, and a mapping relationship between each brush type and the corresponding waveform is established to obtain a waveform set. The waveform set is stored in a storage device (e.g., a flash memory) of the active stylus 100, so that a corresponding target waveform can be selected from the waveform set by the controller according to the body simulation information. It should be noted that the number of sound waveforms corresponding to each brush type is at least one. Audio of different frequency bands can be obtained from the audio files by means of a filter, and then converted into waveforms by the professional software. For example, if the brush type is a marker, waveforms corresponding to the marker in a low-frequency band, a mid-frequency band and a high-frequency band can be obtained respectively. It should be noted that the number of frequency bands is not limited.

In an embodiment, the brush type is obtained from the body simulation information. A target waveform is selected from the waveform set according to the brush type and the mapping relationships between different brush types and the respective waveforms.

In an embodiment, in a case where the body simulation information includes the brush type and stylus tip diameter, candidate waveforms are selected from the waveform set according to the brush type. The target waveform is selected from the candidate waveforms according to the stylus tip diameter.

In an embodiment, the body simulation information includes the brush type. On this basis, an optional implementation of selecting the at least one target waveform from the waveform set according to the body simulation information is that the at least one target waveform is selected from the waveform set according to the brush type and a target simulation mode. The target simulation mode includes a sound simulation mode, a vibration simulation mode or a combination thereof. The sound simulation mode refers to a mode that can simulate sound. The vibration simulation mode refers to a mode that can simulate the vibration effect. In this embodiment, an optional implementation of selecting the at least one target waveform from the waveform set according to the brush type and the target simulation mode is that the candidate waveforms are determined among the waveform set according to the brush type. Then, the target waveform is selected from the candidate waveforms according to the target simulation mode.

As yet another optional implementation, the target waveform matching the body simulation information is selected from the waveform set according to the body simulation information. The target waveform can be a composite waveform used to achieve the corresponding vibration and sound effects.

Step (S203) The motor device 120 is controlled to perform a vibration operation according to the operation attribute information and the at least one target waveform, so that the motor device 120 generates a vibration effect, a sound effect or a vibration-sound combined effect corresponding to the operation attribute information and the body simulation information.

In an embodiment, the at least one target waveform is combined to generate a composite waveform. The composite waveform is then fused with a PWM carrier to obtain a drive signal. A duty cycle of the drive signal is determined according to the operation attribute information. The motor device 120 is controlled to perform the vibration operation according to the duty cycle and the drive signal, so that the vibration effect, the sound effect or the vibration-sound combined effect corresponding to the operation attribute information and the body simulation information are generated by the motor device 120.

In an embodiment, the target waveforms are classified to obtain sound waveforms and vibration waveforms. A sound drive signal is determined according to the sound waveforms and the operation attribute information. A vibration drive signal is determined according to the vibration waveforms and the operation attribute information. The motor device 120 is controlled to perform the vibration operation according to the sound drive signal, so that the sound effect corresponding to the operation attribute information and the body simulation information is generated. The motor device 120 is controlled to perform the vibration operation according to the vibration drive signal, so that the vibration effect corresponding to the operation attribute information and the body simulation information is generated.

Based on the fourth implementation in step (S202), another optional implementation method according to this application is as follows. In a case where the target waveform is the composite waveform, that is, the target waveform includes both a sound waveform and a vibration waveform, a drive module is controlled to modulate the target waveform to generate a drive signal. The motor device 120 is driven according to the drive signal to perform the vibration operation, so that the motor device the vibration effect and the sound effect corresponding to the operation attribute information and the body simulation information are generated by the motor device 120.

In an embodiment, the motor device 120 can be a linear motor, specifically an X-axis linear motor. The X-axis linear motor refers to a linear vibration motor whose vibration direction is along an X-axis (horizontal direction, parallel to the writing direction of the stylus). The core of the X-axis linear motor is that a mass block is electromagnetically driven to perform reciprocating linear motion along a single horizontal axis instead of rotational motion. In this application, the X-axis linear motor can be mounted in the middle of the stylus body or near the user's grip area, so that the vibration signal and the sound signal are effectively transmitted to the user's hand. The X-axis linear motor has directional vibration characteristics and the vibration direction is consistent with the axis of the stylus body, thus providing high-precision vibration feedback and a more realistic writing experience.

The above method for controlling the active stylus 100 acquires the body simulation information and the operation attribute information. The at least one target waveform is selected from the waveform set according to the body simulation information. The motor device 120 is controlled to perform the vibration operation according to the operation attribute information and the at least one target waveform, so that the vibration effect, the sound effect or the vibration-sound combined effect corresponding to the operation attribute information and the body simulation information are generated by the motor device 120. Compared to traditional active styluses that require an additional speaker to simulate a real writing feel, this application only needs to determine the target waveform according to the body simulation information, and then control the motor device 120 to perform the vibration operation according to the operation attribute information and the target waveform to achieve simulation of the sound effect, the vibration effect or the vibration-sound combined effect. This not only effectively saves the internal space of the active stylus 100, but also allows users to flexibly choose the writing effect according to personal needs. Furthermore, the method of controlling the motor device 120 according to the target waveform enables synchronous coordination of vibration sensation and sound, which can avoid feedback delay or misalignment, make the writing interaction more natural and coherent, and better meet the needs of emerging scenarios such as paperless offices and electronic education, leading to a wide application range.

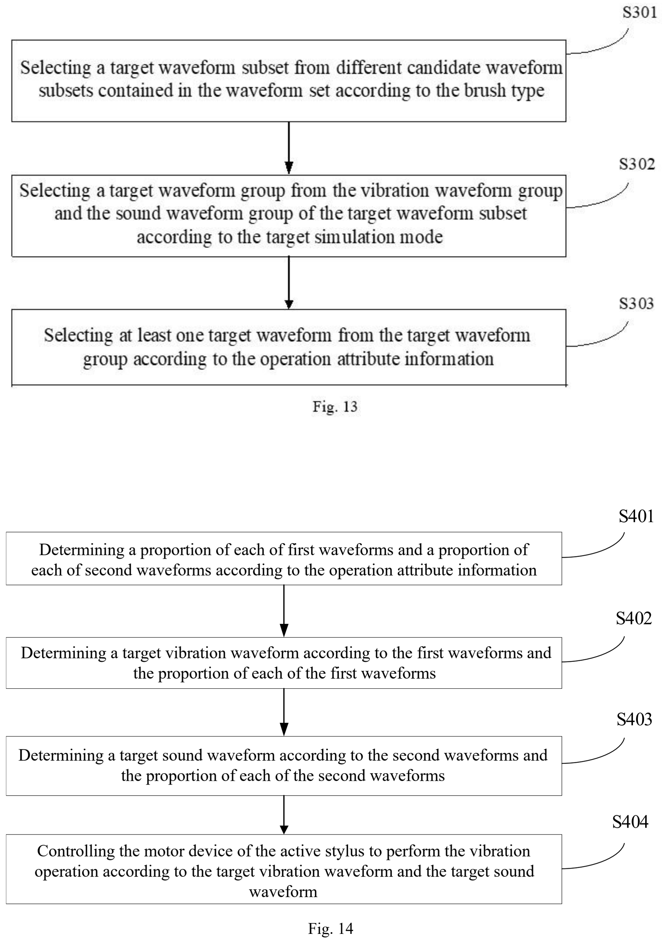

On the basis of the above embodiments, in order to match writing scenarios more accurately and flexibly adapt to usage demands, as shown in Fig. 13, an optional implementation method for selecting the at least one target waveform from the waveform set according to the brush type and the target simulation mode includes the following steps.

Step (S301) A target waveform subset is selected from different candidate waveform subsets contained in the waveform set according to the brush type.

Each candidate waveform subset includes a vibration waveform group and a sound waveform group. The vibration waveform group includes two or more vibration waveforms. The sound waveform group includes two or more sound waveforms. The overall frequency band of the vibration waveform group ranges approximately from 50 Hz to 300 Hz. The overall frequency band of the sound waveform group ranges approximately from 300 Hz to 20 kHz. Among the two or more vibration waveforms, the frequency bands of the different vibration waveforms can be completely the same or different. Specifically, different frequency bands can be completely different (i.e., with no overlap) or partially different (i.e., with overlap). Among the two or more sound waveforms, the frequency bands of the different sound waveforms can be completely the same or different. Specifically, different frequency bands can be completely different (i.e., with no overlap) or partially different (i.e., with overlap).

In an embodiment, a candidate waveform subset corresponding to each brush type is established. The candidate waveform subset includes a vibration waveform group and a sound waveform group. The vibration waveform group includes two or more vibration waveforms. The sound waveform group includes two or more sound waveforms. An audio file corresponding to the brush type is pre-recorded, and sound waveforms of different frequency bands (such as a low-frequency band, a mid-frequency band and a high-frequency band) are obtained according to the audio file. The specific acquisition method is described in detail in the above embodiments and is not repeated here. In an embodiment, an optional implementation method for acquiring vibration waveforms of different frequency bands of the brush type includes the following steps. An original vibration signal of a physical pen corresponding to the brush type in the specific frequency band is collected. Denoising, filtering and segmented sampling are performed on the original vibration signal. Effective vibration features of different frequency bands are extracted and converted into digital vibration waveforms. Then, the digital vibration waveforms are classified according to frequency bands to form a vibration waveform group corresponding to the brush type (e.g. a high-frequency graininess waveform and a low-frequency damping waveform of a pencil). After the vibration waveform group and the sound waveform group corresponding to the brush type are obtained, a mapping relationship among the brush type, the vibration waveform group and the sound waveform group is established, which facilitates subsequent retrieval of the waveform group corresponding to the brush type.

In an embodiment, the target waveform subset is selected from the candidate waveform subsets according to the brush type and the mapping relationship between various brush types and the candidate waveform subsets.

Step (S302) A target waveform group is selected from the vibration waveform group and the sound waveform group of the target waveform subset according to the target simulation mode.

The target waveform group refers to a waveform group corresponding to the target simulation mode.

In an embodiment, in a case where the target simulation mode is a sound simulation mode, the sound waveform group is selected from the target waveform subset as the target waveform group. In a case where the target simulation mode is a vibration simulation mode, the vibration waveform group is selected from the target waveform subset as the target waveform group. In a case where the target simulation mode includes both the sound simulation mode and the vibration simulation mode, at least one target waveform includes a first waveform and a second waveform, where the first waveform is a vibration waveform selected from the vibration waveform group of the target waveform subset according to operation attribute information, and the second waveform is a sound waveform selected from the sound waveform group of the target waveform subset according to operation attribute information. The number of the first waveform is at least one. The number of the second waveform is at least one.

in another embodiment, weight coefficients are set for the vibration waveform group and the sound waveform group corresponding to different simulation modes. After the target mode is triggered, waveform groups are screened from the target waveform subset according to preset weights (a single group with full weight, or two groups weighted proportionally), and gradient selection of modes is supported. For example, in response to a case that the target simulation mode is a vibration simulation mode (i.e., a vibration-priority mode), a weight of the vibration waveform group is 100%, and a weight of the sound waveform group is 30% (weak sound generation). In this case, all vibration waveforms in the vibration waveform group and a portion of the sound waveforms in the sound waveform group are adopted as the target waveform group.

In another embodiment, the target waveform group is selected from the vibration waveform group and the sound waveform group of the target waveform subset according to the target simulation mode and auxiliary selection conditions. For example, in a case where the target simulation mode is the core condition, and detailed writing scene features (such as fine drawing, rapid line drawing and signature) are superimposed as the auxiliary selection conditions, a specific sub-waveform group suitable for the "mode + scene" combination is selected from the vibration waveform group and the sound waveform group of the target waveform subset.

Step (S303) At least one target waveform is selected from the target waveform group according to the operation attribute information.

In an embodiment, multi-level threshold intervals are predefined for different writing speeds and different writing pressures (e.g., pressure: light/medium/heavy; and speed: slow/medium/fast), and mapping relationships between speed intervals, pressure intervals, and a single target waveform or combined target waveforms are preset. After real-time writing speed information and writing pressure information are detected, corresponding intervals are matched, and the corresponding target waveforms are directly invoked. For example, in the target waveform group corresponding to a pencil brush type, the mapping relationship between actual operation attribute information and the waveform is determined as "light pressure + slow writing → low-frequency weak vibration" waveform. On this basis, medium-frequency waveforms and low-frequency waveforms are selected from the sound waveform group as target sound waveforms. The low-frequency vibration waveform is selected from the vibration waveform group as the target vibration waveform. The target sound waveform and the target vibration waveform are determined as the target waveforms.

In another embodiment, in a case where the target waveform group includes a sound waveform group and a vibration waveform group, a target sound waveform is selected from the sound waveform group according to the writing speed information, and a target vibration waveform is selected from the vibration waveform group according to the writing pressure information. The target sound waveform and the target vibration waveform are determined as the target waveforms.

In another embodiment, independent weights are preset for different writing speed information and different writing pressure information respectively, which are adjustable according to practical scenarios, such as a higher pressure weight for drawing scenarios and a higher speed weight for note-taking scenarios. The speed adaptation score and pressure adaptation score of each waveform in the target waveform group are determined. Then, based on the preset weights, the speed adaptation score and pressure adaptation score of each waveform are weighted and summed to obtain a total adaptation score of each waveform. Waveforms with total adaptation scores ranking within a preset top number (e.g., top three) are selected as the target waveforms. It should be noted that the speed adaptation score and pressure adaptation score of each waveform in the target waveform group can be pre-configured. For example, for the sound waveform group, a low-frequency waveform has a low speed adaptation score in high writing speed scenarios. In this embodiment, in a case where the target waveform group includes both a sound waveform group and a vibration waveform group, when selecting the target waveform, it is necessary to separately determine the total adaptation score of each sound waveform in the sound waveform group and the total adaptation score of each vibration waveform in the vibration waveform group. During selection, waveforms ranking within the preset top number are selected from are selected from both waveform groups as target waveforms. For example, in response to a case that the preset top number is 2, the top 2 sound waveforms are selected as second waveforms, and the top 2 vibration waveforms are selected as first waveforms. The first waveforms and the second waveforms are then determined as the target waveforms. For instance, with a pressure weight of 0.7 and a speed weight of 0.3, in response to a case that waveform A has a pressure adaptation score of 8 and a speed adaptation score of 6, the final total adaptation score of waveform A after weighted summation is 7.2.

In this embodiment, waveform subsets can be divided according to brush types. Different brush types correspond to exclusive vibration and sound waveform groups, which fit the real writing feedback of different tools such as fountain pens, pencils and markers, thus improving the fidelity of the experience and facilitating accurate matching to writing scenarios. In this embodiment, the target waveform groups can also be selected according to target simulation modes (focusing on vibration mode, sound mode and vibration-sound dual mode), which adapt to different scenarios such as detailed drawing and quick note-taking, and flexibly meet personalized user demands. In this embodiment, the vibration waveform group and the sound waveform group include multi-frequency band candidate waveforms. The target waveforms are screened in combination with operation attribute information, which can accurately adjust vibration granularity and sound clarity and avoid monotonous feedback.

On the basis of the above embodiments, in a case where the number of the first waveforms and the number of the second waveforms are each at least two, in order to further enhance the delicacy and authenticity of the simulated feedback, as shown in Fig. 14, an optional implementation method for controlling the motor device 120 to perform the vibration operation according to the operation attribute information and the at least one target waveform includes the following steps.

Step (S401) A proportion of each of at least two first waveforms and a proportion of each of at least two second waveforms are determined according to the operation attribute information.

The proportion refers to a weight ratio corresponding to each waveform.

In an embodiment, the proportion of each of the at least two first waveforms and the proportion of each of the at least two second waveforms are determined according to operation speed information in the operation attribute information. Specifically, different speed ranges and their mapping relationships to the proportion of each of the at least two first waveforms and the proportion of each of the at least two second waveforms can be pre-configured. For example, in response to a case that the speed range corresponds to a high-speed range, the selected first waveforms include a high-frequency band vibration waveform and a mid-frequency band vibration waveform, and the selected second waveforms include a high-frequency band sound waveform and a mid-frequency band sound waveform. The mapping relationship between the high-speed range and the proportions of each waveform is as follows: the proportion of the high-frequency band vibration waveform among the at least two first waveforms is 80%, and the proportion of the mid-frequency band vibration waveform among the at least two first waveforms is 20%; the proportion of the high-frequency band sound waveform among the at least two second waveforms is 80%, and the proportion of the mid-frequency band sound waveform among the at least two second waveforms is 20%. In response to a case that the speed range corresponds to a low-speed range, the selected first waveforms include a low-frequency band vibration waveform and a mid-frequency band vibration waveform, and the selected second waveforms include a low-frequency sound waveform and a mid-frequency sound waveform. The mapping relationship between the low-speed range and the proportions of each waveform is as follows: the proportion of low-frequency band vibration waveforms among the at least two first waveforms is 90%, and the proportion of mid-frequency band vibration waveforms among the at least two first waveforms is 10%; and the proportion of low-frequency band sound waveforms among the at least two second waveforms is 90%, and the proportion of mid-frequency band sound waveforms among the at least two second waveforms is 10%.

In another embodiment, writing operation parameters are determined according to the writing speed information, the writing pressure information and a combination thereof in the operation attribute information. The proportion of each of the at least two first waveforms and the proportion of each of the at least two second waveforms are determined according to the writing operation parameters. In another embodiment, the writing operation parameters are determined according to the writing speed information and the writing pressure information in the operation attribute information. The proportion of each of the at least two first waveforms and the proportion of each of the at least two second waveforms are determined according to the writing operation parameters. In this embodiment, an optional implementation of determining the writing operation parameters according to the writing speed information and the writing pressure information in the operation attribute information is that the writing speed information and the writing pressure information are divided into multiple discrete threshold intervals in advance, which are combined to form several fixed levels of the writing operation parameter, such as light slow, light fast, medium slow, medium fast, heavy slow and heavy fast. A corresponding level of the writing operation parameters can be determined according to the collected writing speed information and writing pressure information. On this basis, one optional implementation method for determining the proportion of each of the at least two first waveforms and the proportion of each of the at least two second waveforms according to the writing operation parameters includes the following steps. The proportion of each of the at least two first waveforms and the proportion of each of the at least two second waveforms are preset for each writing operation parameter level to form a proportion mapping table. Speed and pressure are collected in real time, respective intervals of the speed and pressure are determined, and a current writing operation parameter level is obtained. Then, the corresponding proportion of each of the at least two first waveforms and the proportion of each of the at least two second waveforms is directly output by looking up the proportion mapping table.

In another embodiment, the writing speed information and the writing pressure information are normalized and mapped to the same numerical range (e.g., 0 to 1), respectively, to obtain a normalized speed component and a normalized pressure component. The normalized speed component and the normalized pressure component are then weighted and summed according to preset weights to obtain a continuous writing operation parameter values (e.g., parameter value = α × normalized pressure + β × normalized speed, α + β = 1, where α is a first weight associated with the writing pressure information; β is a second weight corresponding to the writing speed information; in the waveform proportion determination stage, writing speed is more important than writing pressure, and the second weight is thus greater than the first weight). The continuous writing operation parameter value is aet as an independent variable, the proportion of each of the at least two first waveforms and the proportion of each of the at least two second waveforms are calculated respectively through a preset linear or a preset nonlinear function, with the proportion changing continuously and smoothly with the continuous writing operation parameter value.

Step (S402) A target vibration waveform is determined according to the at least two first waveforms and the proportion of each of the at least two first waveforms.

In an embodiment, linear weighted summation is performed on a plurality of first waveforms (vibration waveforms with different frequency bands and characteristics) according to their respective proportions to obtain the target vibration waveform. The target vibration waveform is expressed as: $target vibration waveform = {\sum }_{i = 1}^{n} \left(i-th first waveform\times proportion of the i-th first waveform\right)$ . In the above equation, *i* represents the *i* -th waveform. Among all the first waveforms, a higher proportion of a waveform indicates a greater influence of the waveform on the final result. Finally, a continuous and smooth composite vibration waveform is superimposed, which is determined as the target vibration waveform.

In another embodiment, a period duration of a driving period of the motor device 120 is acquired. An occupancy duration of each first waveform is determined according to the period duration and the proportion of each first waveform. Specifically, for each first waveform, a product of the period duration and the proportion of a corresponding first waveform is taken as the occupancy time of the corresponding first waveform. According to the occupancy time of each first waveform, waveform segments of each first waveform are determined. The waveform segments are then spliced and smoothed to obtain the target vibration waveform. The purpose of the smoothing process is to eliminate the sense of discontinuity between adjacent waveform segments.

Step (S403) A target sound waveform is determined according to the at least two second waveforms and the proportion of each of the at least two second waveforms.

It should be noted that the method for determining the target sound waveform in this embodiment can refer to the specific implementation method for determining the target vibration waveform in the above embodiments, which is not repeated here.

Step (S404) The motor device 120 is controlled to perform the vibration operation according to the target vibration waveform and the target sound waveform.

In an embodiment, time-sharing alternating processing is performed on the target vibration waveform and the target sound waveform according to a preset time sequence, and different driving time periods are allocated to the target vibration waveform and the target sound waveform. Within a complete driving period, in the first half of the period, the driving module is controlled to generate a PWM drive signal according to the target vibration waveform, and the motor device 120 is controlled to output vibration feedback; in the second half of the period, the driving module is controlled to switch to generate a PWM drive signal according to the target sound waveform, and the motor device 120 is controlled to generate corresponding sound vibration. Through rapid time sequence switching, the effect of simultaneous existence of vibration and sound is achieved in human auditory and tactile perception, avoiding signal conflicts and hardware overload that may occur when the two waveforms are directly superimposed in the time domain, thereby ensuring driving stability.

In another embodiment, linear superposition in the time domain is performed on the target vibration waveform and the target sound waveform to generate a composite waveform. Then, the composite waveform is converted into a PWM drive signal by the driving module for controlling the motor device 120. Specifically, amplitude normalization is performed on the target vibration waveform and the target sound waveform to prevent exceeding the hardware driving range after superposition, and then the superposition operation is performed. The drive module performs signal modulation on the composite waveform to generate a PWM drive signal. After receiving the signal, the motor device 120 simultaneously responds to the low-frequency component of the vibration waveform and the high-frequency component of the sound waveform, outputs vibration and sound synchronously, thereby achieving high synchronization of dual feedback and restoring the collaborative feedback effect of real writing.

In this embodiment, the number of the first waveform and the number of the second waveform are a plurality. The proportion of each of the plurality of first waveforms and the proportion of each of the plurality of second waveforms can be determined according to the operation attribute information. A vibration waveform that better reflects the actual scene can be obtained according to the plurality of first waveforms and the proportion of each of the plurality of first waveforms. A sound waveform that better reflects the actual scene can be obtained according to the plurality of second waveforms and the proportion of each of the second waveforms, thereby providing a smoother and more gradual feedback effect. This completely fits the natural change of touch and sound during real pen-and-paper writing without abrupt transitions, and significantly improves immersion and authenticity. Furthermore, a single vibration waveform or sound waveform is difficult to simulate the complex feedback such as the granular texture of a pencil, the damping sensation of a writing brush, and the smooth sensation of a marker. By mixing multiple waveforms according to their proportions, vibration and sound components of different frequency bands and characteristics can be integrated, and the unique composite touch and acoustic characteristics of various brushes can be accurately restored. This makes the electronic writing feedback closer to the physical feedback details of real pen and paper, thereby improving user satisfaction.

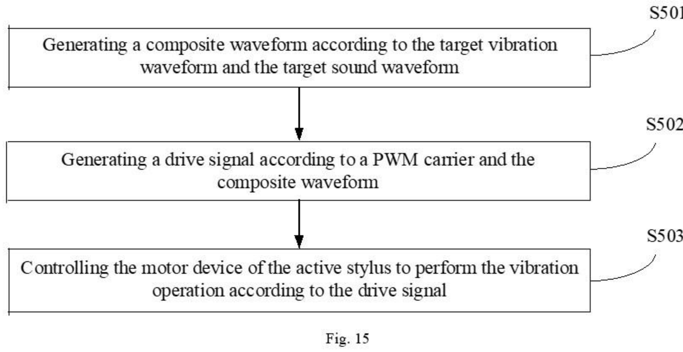

In one embodiment, in order to further realize high synchronization of writing with vibration and sound feedback and improve writing immersion, as shown in Fig. 15, an optional implementation method for controlling the motor device 120 to perform the vibration operation according to the target vibration waveform and the target sound waveform includes the following steps.

Step (S501) A composite waveform is generated according to the target vibration waveform and the target sound waveform.

The composite waveform refers to a waveform obtained by fusing the target vibration waveform and the target sound waveform.

In an embodiment, waveform fusion is performed on the target vibration waveform and the target sound waveform to obtain the composite waveform.

In another embodiment, amplitude normalization is performed on the target vibration waveform and the target sound waveform respectively to avoid exceeding the hardware driving range after superposition, and then linear addition is performed on the target vibration waveform and the target sound waveform according to preset weight coefficients or proportion coefficients calculated based on operation attributes to obtain the composite waveform.

In another embodiment, by utilizing the frequency band difference between the target vibration waveform that is dominated by a low-frequency component and the target sound waveform that is dominated by a high-frequency component, frequency band division and isolation are performed on the target vibration waveform and the target sound waveform using a digital filter. The filtered low-frequency vibration component and high-frequency sound component are then directly superimposed to generate the composite waveform. Specifically, low-pass filtering is performed on the target vibration waveform to retain the core haptic frequency band, and high-pass filtering is performed on the target sound waveform to retain the effective sound-producing frequency band. The two filtered waveforms are then added in the time domain to obtain a composite waveform with mutually independent frequency bands.

Step (S502) The drive signal is generated according to a PWM carrier and the composite waveform.

In an embodiment, the driving module is controlled to perform modulation and fusion on the PWM carrier and the composite waveform to obtain the drive signal.

In another embodiment, a duty cycle of the PWM carrier is determined according to the writing speed information, the writing pressure information or the combination thereof. A composite drive signal is generated according to the composite waveform, the PWM carrier and the duty cycle of the PWM carrier. Specifically, the writing speed information is standardized to obtain a first value, and the writing pressure information is standardized to obtain a second value, so that a third weight corresponding to the writing speed information and a fourth weight corresponding to the writing pressure information are obtained. It should be noted that in the duty cycle determination stage, the contribution degree of pressure is higher than that of speed. Therefore, the fourth weight is greater than the third weight, and the sum of the third and fourth weights is 1. Weighted summation is performed on the first value and the second value according to the third weight and the fourth weight to obtain a comprehensive score. The duty cycle is determined according to the comprehensive score and score intervals. Different score intervals correspond to respective duty cycles, and the duty cycle corresponding to the score interval to which the comprehensive score belongs is determined as the duty cycle of the PWM carrier. In this embodiment, an optional implementation method for generating the drive signal according to the composite waveform, the PWM carrier and the duty cycle of the PWM carrier includes the following steps. The driving module is controlled to take the PWM carrier as a time-based pulse framework, take the composite waveform as a modulation control signal, and combine the calculated duty cycle of the PWM carrier as an intensity gain constraint to generate the drive signal.

Step (S503) The motor device 120 is controlled to perform the vibration operation according to the drive signal.

In this embodiment, the target vibration waveform and the target sound waveform are first fused into a single composite waveform, and then a PWM drive signal is uniformly generated according to the composite waveform. In this way, complete time sequence consistency between vibration and sound is guaranteed at the signal source, thereby avoiding asynchronous feedback, delay or misalignment problems that may occur in time-sharing driving or independent channel driving. Furthermore, in this embodiment, the duty cycle of the PWM carrier is determined in real time according to the writing speed and writing pressure, achieving a strong correlation between the PWM carrier parameters and user operation attributes, instead of adopting fixed carrier parameters. This allows the basic characteristics of the drive signal to dynamically change with the user's writing behavior.

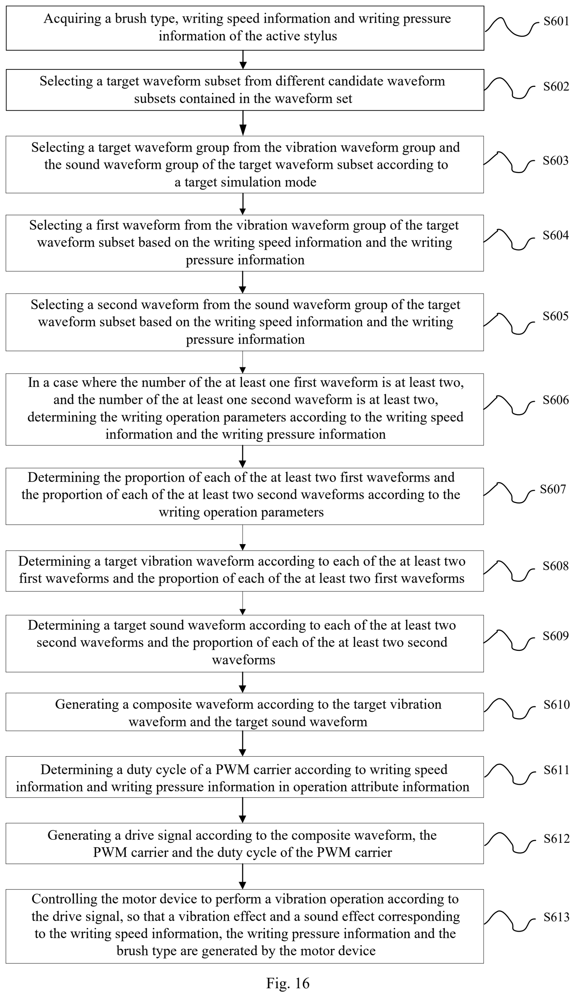

In one embodiment, as shown in Fig. 16, another optional implementation of the method for controlling the active stylus 100 includes the following steps.

Step (S601) A brush type, writing speed information and writing pressure information of the active stylus 100 are acquired.

Step (S602) A target waveform subset is selected from different candidate waveform subsets contained in the waveform set. Each of the candidate waveform subsets includes a vibration waveform group and a sound waveform group. The vibration waveform group includes two or more vibration waveforms. The sound waveform group includes two or more sound waveforms.

Step (S603) A target waveform group is selected from the vibration waveform group and the sound waveform group of the target waveform subset according to a target simulation mode. In a case where the target simulation mode includes both a sound simulation mode and a vibration simulation mode, the target waveform group includes both the vibration waveform group and the sound waveform group.

Step (S604) A first waveform is selected from the vibration waveform group of the target waveform subset based on the writing speed information and the writing pressure information.

Step (S605) A second waveform is selected from the sound waveform group of the target waveform subset based on the writing speed information and the writing pressure information.

Step (S606) In a case where the number of the at least one first waveform is at least two, and the number of the at least one second waveform is at least two, the writing operation parameters are determined according to the writing speed information and the writing pressure information.

Step (S607) The proportion of each of the at least two first waveforms and the proportion of each of the at least two second waveforms are determined according to the writing operation parameters.

Step (S608) A target vibration waveform is determined according to each of the at least two first waveforms and the proportion of each of the at least two first waveforms.

Step (S609) A target sound waveform is determined according to each of the at least two second waveforms and the proportion of each of the at least two second waveforms.

Step (S610) A composite waveform is generated according to the target vibration waveform and the target sound waveform.

Step (S611) A duty cycle of a PWM carrier is determined according to writing speed information and writing pressure information in operation attribute information.

Step (S612) A drive signal is generated according to the composite waveform, the PWM carrier and the duty cycle of the PWM carrier.

Step (S613) The motor device 120 is controlled to perform a vibration operation according to the drive signal, so that a vibration effect and a sound effect corresponding to the writing speed information, the writing pressure information and the brush type are generated by the motor device 120.

In this embodiment, the body simulation information and the operation attribute information of the active stylus 100 are acquired. At least one target waveform is selected from a waveform set according to the body simulation information. The motor device 120 is controlled to perform a vibration operation according to the operation attribute information and the at least one target waveform, so that a vibration effect, a sound effect or a vibration-sound combined effect corresponding to the operation attribute information and the body simulation information are generated by the motor device 120. Compared with a conventional active stylus that requires an additional speaker to simulate a real writing feel, this application the present application only needs to determine a target waveform according to body simulation information and then control the motor device 120 to perform a vibration operation according to operation attribute information and the target waveform, thereby realizing simulation of a sound effect, a vibration effect or a vibration-sound combined effect. The internal space of the active stylus 100 is effectively saved, and a user can flexibly select a writing effect according to personal demands Meanwhile, the manner of controlling the motor device 120 based on the target waveform enables synchronous coordination of vibration sensation and sound, avoids feedback delay or misalignment, makes writing interaction more natural and coherent, better meets the requirements of emerging scenarios such as paperless office and electronic education, leading to a a wide application range.

In the various embodiments of this application, the execution order of each process can be determined based on functions and internal logic thereof, which shall not constitute any limitation on the implementation processes of the embodiments of the present application.

The various embodiments described above can be implemented individually or in combination, which is not limited herein.

A person of ordinary skill in the art can recognize that the units and algorithm steps described in conjunction with the embodiments disclosed herein can be implemented by electronic hardware, or a combination of computer software and electronic hardware. Whether such functions are executed by hardware or software depends on specific applications and design constraint conditions of the technical solution. Those skilled in the art can adopt different methods to implement the described functions for each specific application, which should not be considered to exceed the scope of this application.

In the embodiments provided in this application, it should be understood that the disclosed apparatus can be implemented in other ways. For example, the apparatus embodiments described above are merely illustrative. For instance, the division of the devices in the active stylus is only a logical functional division, and in actual implementation, there may be other division methods. For example, multiple units or components may be combined or integrated into another system, or some features may be omitted or not executed. Furthermore, the illustrated or discussed mutual coupling, direct coupling or communication connection may be indirect coupling or communication connection between apparatuses or units via certain interfaces, and may be electrical, mechanical or other forms.

The units described as separate components may or may not be physically separate. The components shown as units may or may not be physical units, that is, they may be disposed at a single location or distributed over multiple network units. Part or all of the units may be selected according to actual needs to achieve the objectives of the solutions of the embodiments.

In addition, the functional units in the various embodiments of this application may be integrated into one processing unit, or each unit may exist physically separately, or two or more units may be integrated into one unit.

If the functions described above are implemented as software functional units and sold or used as independent products, they can be stored in a computer-readable storage medium. Based on such understanding, the technical solution of the present application, or the part contributing to the prior art, or part of the technical solution may be embodied in the form of a software product. The computer software product is stored in a storage medium and includes several instructions for enabling a computer device (which may be a personal computer, server, or network device) to execute all or part of the steps of the methods described in the various embodiments of this application. The above storage medium includes various media capable of storing program code, such as a universal serial bus (USB) flash drive, a portable hard drive, a rROM, a RAM, a magnetic disk and an optical disk.

The embodiments described above are merely illustrative of the present disclosure, and are not intended to limit the scope of the present disclosure. It should be understood that various changes or substitutions made by those of ordinary skill in the art without departing from the spirit of the present disclosure shall fall within the scope of the present disclosure defined by the appended claims.

## Claims

1. An active stylus (100), comprising:
a drive device (110); and
a motor device (120);
**characterized in that** the drive device (110) is configured to provide at least one drive signal, and each of the at least one drive signal comprises a signal obtained by processing writing sound recording of a traditional pen; and
the motor device (120) is configured to receive the at least one drive signal, the at least one drive signal is configured to drive the motor device (120) to generate a vibration signal, a sound signal or a combination thereof to achieve a vibration effect, a sound effect or a vibration-sound combined effect of the active stylus (100), and the vibration effect, the sound effect or the vibration-sound combined effect is configured to characterize a brush type of the active stylus (100).

2. The active stylus (100) of claim 1, further comprising:
a pressure detection device (130);
wherein the pressure detection device (130) is configured to detect a tip pressure of the active stylus (100) to generate a pressure detection signal; and
the drive device (110) is further configured to adjust the at least one drive signal according to the pressure detection signal to adjust the vibration signal, the sound signal or a combination thereof, thereby adjusting the vibration effect, the sound effect or the vibration-sound combined effect.

3. The active stylus (100) of claim 2, **characterized in that** each of the at least one drive signal comprises a pulse-width modulation (PWM) wave signal; the drive device (110) comprises a duty cycle adjustment unit (115); and the duty cycle adjustment unit (115) is configured to adjust a duty cycle of the PWM wave signal according to the pressure detection signal, so as to adjust the vibration signal, the sound signal or a combination thereof, thereby adjusting the vibration effect, the sound effect or the vibration-sound combined effect.

4. The active stylus (100) of claim 3, **characterized in that** in response to a case that the pressure detection signal is within a first preset pressure range, the duty cycle adjustment unit (115) is configured to adjust the duty cycle of the PWM wave signal to a first preset value; or
in response to a case that the pressure detection signal is within a second preset pressure range, the duty cycle adjustment unit (115) is configured to adjust the duty cycle of the PWM wave signal to a second preset value;
**characterized in that** an upper limit of the first preset pressure range is less than a lower limit of the second preset pressure range, and the first preset value is less than the second preset value.

5. The active stylus (100) of claim 1, further comprising:
a communication device (140);
wherein the communication device (140) is configured to receive a speed detection signal sent by a function device (200), and the speed detection signal is configured to characterize a writing speed of the active stylus (100) on the function device (200); and
the drive device (110) is further configured to adjust the at least one drive signal according to the speed detection signal to adjust the vibration signal, the sound signal or a combination thereof, thereby adjusting the vibration effect, the sound effect or the vibration-sound combined effect.

6. The active stylus (100) of claim 5, **characterized in that** the drive device (110) comprises a control unit (116); and the control unit (116) is configured to control whether to output the at least one drive signal to the motor device (120) according to the speed detection signal, so as to control whether the motor device (120) generates the vibration signal, the sound signal or a combination thereof, thereby controlling whether to achieve the vibration effect, the sound effect or the vibration-sound combined effect; and
in response to a case that the speed detection signal is greater than a preset threshold, the control unit (116) is configured to output the at least one drive signal to the motor device (120); or
in response to a case that the speed detection signal is less than or equal to the preset threshold, the control unit (116) is configured to stop outputting the at least one drive signal to the motor device (120).

7. The active stylus (100) of any one of claims 1-6, **characterized in that** the drive device (110) further comprises a filter unit (117), the filter unit (117) is configured to allow a target drive sub-signal of each of the at least one drive signal in a frequency domain to pass through, and a frequency range of the target drive sub-signal is 150 Hz to 20 kHz; and
a resonant frequency of the motor device (120) is located within the frequency range of the target drive sub-signal.

8. A method for controlling an active stylus (100), comprising:
acquiring body simulation information and operation attribute information of the active stylus (100);
selecting at least one target waveform from a waveform set according to the body simulation information; and
controlling a motor device (120) of the active stylus (100) to perform a vibration operation according to the operation attribute information and the at least one target waveform, so that the motor device (120) generates a vibration effect, a sound effect or a combination thereof corresponding to the operation attribute information and the body simulation information.

9. The method of claim 8, **characterized in that** the body simulation information comprises brush type; and
the step of selecting at least one target waveform from a waveform set according to the body simulation information comprises:
selecting the at least one target waveform from the waveform set according to the brush type and a target simulation mode; wherein the target simulation mode comprises a sound simulation mode, a vibration simulation mode or a combination thereof.

10. The method of claim 9, **characterized in that** the step of selecting the at least one target waveform from the waveform set according to the brush type and the target simulation mode comprises:
selecting a target waveform subset from a plurality of candidate waveform subsets contained in the waveform set according to the brush type; wherein each of the plurality of candidate waveform subsets comprises a vibration waveform group and a sound waveform group, the vibration waveform group comprises two or more vibration waveforms, and the sound waveform group comprises two or more sound waveforms;
selecting a target waveform group from the vibration waveform group and the sound waveform group of the target waveform subset according to the target simulation mode; and
selecting the at least one target waveform from the target waveform group according to the operation attribute information.

11. The method of claim 10, **characterized in that** in a case where the target simulation mode comprises the sound simulation mode and the vibration simulation mode, the at least one target waveform comprises at least one first waveform and at least one second waveform; and
the at least one first waveform is a vibration waveform selected from the vibration waveform group of the target waveform subset according to the operation attribute information; and the at least one second waveform is a sound waveform selected from the sound waveform group of the target waveform subset according to the operation attribute information.

12. The method of claim 11, **characterized in that** in a case where the number of the at least one first waveform is at least two, and the number of the at least one second waveform is at least two, the step of controlling the motor device (120) to perform the vibration operation according to the operation attribute information and the at least one target waveform comprises:
determining a proportion of each of at least two first waveforms and a proportion of each of at least two second waveforms according to the operation attribute information;
determining a target vibration waveform according to the at least two first waveforms and the proportion of each of the at least two first waveforms;
determining a target sound waveform according to the at least two second waveforms and the proportion of each of the at least two second waveforms; and
controlling the motor device (120) to perform the vibration operation according to the target vibration waveform and the target sound waveform.

13. The method of claim 12, **characterized in that** the step of determining the proportion of each of the at least two first waveforms and the proportion of each of the at least two second waveforms according to the operation attribute information comprises:
determining writing operation parameters according to writing speed information, writing pressure information or a combination thereof in the operation attribute information; and
determining the proportion of each of the at least two first waveforms and the proportion of each of the at least two second waveforms according to the writing operation parameters;
**characterized in that** the writing pressure information is a pressure detection signal output by a pressure detection device (130) of the active stylus (100).

14. The method of claim 12, **characterized in that** the step of controlling the motor device (120) to perform the vibration operation according to the target vibration waveform and the target sound waveform comprises:
generating a composite waveform according to the target vibration waveform and the target sound waveform;
generating a drive signal according to a pulse-width modulation (PWM) carrier and the composite waveform; and
controlling the motor device (120) to perform the vibration operation according to the drive signal.

15. The method of claim 14, **characterized in that** the step of generating the drive signal according to the PWM carrier and the composite waveform comprises:
determining a duty cycle of the PWM carrier according to the writing speed information, the writing pressure information or a combination thereof; and
generating the drive signal according to the composite waveform, the PWM carrier and the duty cycle of the PWM carrier.

## Amended claims

### Amended claims in accordance with Rule 137(2) EPC.

1. An active stylus (100), comprising:
a drive device (110); and
a motor device (120);
wherein the drive device (110) is configured to provide at least one drive signal, and each of the at least one drive signal comprises a signal obtained by processing writing sound recording of a traditional pen; and
the motor device (120) is configured to receive the at least one drive signal;
**characterized in that** the at least one drive signal is configured to drive the motor device (120) to generate a vibration signal, a sound signal or a combination thereof to achieve a vibration effect, a sound effect or a vibration-sound combined effect of the active stylus (100), and the vibration effect, the sound effect or the vibration-sound combined effect is configured to characterize a brush type of the active stylus (100); and
the at least one drive signal is generated according to a pulse-width modulation (PWM) carrier and a composite waveform; and the composite waveform is generated according to a target vibration waveform and a target sound waveform.

2. The active stylus (100) of claim 1, further comprising:
a pressure detection device (130);
wherein the pressure detection device (130) is configured to detect a tip pressure of the active stylus (100) to generate a pressure detection signal; and
the drive device (110) is further configured to adjust the at least one drive signal according to the pressure detection signal to adjust the vibration signal, the sound signal or a combination thereof, thereby adjusting the vibration effect, the sound effect or the vibration-sound combined effect.

3. The active stylus (100) of claim 2, **characterized in that** each of the at least one drive signal comprises a pulse-width modulation (PWM) wave signal; the drive device (110) comprises a duty cycle adjustment unit (115); and the duty cycle adjustment unit (115) is configured to adjust a duty cycle of the PWM wave signal according to the pressure detection signal, so as to adjust the vibration signal, the sound signal or a combination thereof, thereby adjusting the vibration effect, the sound effect or the vibration-sound combined effect.

4. The active stylus (100) of claim 3, **characterized in that** in response to a case that the pressure detection signal is within a first preset pressure range, the duty cycle adjustment unit (115) is configured to adjust the duty cycle of the PWM wave signal to a first preset value; or
in response to a case that the pressure detection signal is within a second preset pressure range, the duty cycle adjustment unit (115) is configured to adjust the duty cycle of the PWM wave signal to a second preset value;
**characterized in that** an upper limit of the first preset pressure range is less than a lower limit of the second preset pressure range, and the first preset value is less than the second preset value.

5. The active stylus (100) of claim 1, further comprising:
a communication device (140);
wherein the communication device (140) is configured to receive a speed detection signal sent by a function device (200), and the speed detection signal is configured to characterize a writing speed of the active stylus (100) on the function device (200); and
the drive device (110) is further configured to adjust the at least one drive signal according to the speed detection signal to adjust the vibration signal, the sound signal or a combination thereof, thereby adjusting the vibration effect, the sound effect or the vibration-sound combined effect.

6. The active stylus (100) of claim 5, **characterized in that** the drive device (110) comprises a control unit (116); and the control unit (116) is configured to control whether to output the at least one drive signal to the motor device (120) according to the speed detection signal, so as to control whether the motor device (120) generates the vibration signal, the sound signal or a combination thereof, thereby controlling whether to achieve the vibration effect, the sound effect or the vibration-sound combined effect; and
in response to a case that the speed detection signal is greater than a preset threshold, the control unit (116) is configured to output the at least one drive signal to the motor device (120); or
in response to a case that the speed detection signal is less than or equal to the preset threshold, the control unit (116) is configured to stop outputting the at least one drive signal to the motor device (120).

7. The active stylus (100) of any one of claims 1-6, **characterized in that** the drive device (110) further comprises a filter unit (117), the filter unit (117) is configured to allow a target drive sub-signal of each of the at least one drive signal in a frequency domain to pass through, and a frequency range of the target drive sub-signal is 150 Hz to 20 kHz; and
a resonant frequency of the motor device (120) is located within the frequency range of the target drive sub-signal.

8. A method for controlling an active stylus (100), comprising:
acquiring body simulation information and operation attribute information of the active stylus (100);
selecting at least one target waveform from a waveform set according to the body simulation information; and
controlling a motor device (120) of the active stylus (100) to perform a vibration operation according to the operation attribute information and the at least one target waveform, so that the motor device (120) generates a vibration effect, a sound effect or a combination thereof corresponding to the operation attribute information and the body simulation information;
**characterized in that** the at least one target waveform comprises a target vibration waveform and a target sound waveform;
the step of controlling the motor device (120) to perform the vibration operation according to the target vibration waveform and the target sound waveform comprises:
generating a composite waveform according to the target vibration waveform and the target sound waveform;
generating a drive signal according to a PWM carrier and the composite waveform; and
controlling the motor device (120) to perform the vibration operation according to the drive signal.

9. The method of claim 8, **characterized in that** the body simulation information comprises brush type; and
the step of selecting at least one target waveform from a waveform set according to the body simulation information comprises:
selecting the at least one target waveform from the waveform set according to the brush type and a target simulation mode; wherein the target simulation mode comprises a sound simulation mode, a vibration simulation mode or a combination thereof.

10. The method of claim 9, **characterized in that** the step of selecting the at least one target waveform from the waveform set according to the brush type and the target simulation mode comprises:
selecting a target waveform subset from a plurality of candidate waveform subsets contained in the waveform set according to the brush type; wherein each of the plurality of candidate waveform subsets comprises a vibration waveform group and a sound waveform group, the vibration waveform group comprises two or more vibration waveforms, and the sound waveform group comprises two or more sound waveforms;
selecting a target waveform group from the vibration waveform group and the sound waveform group of the target waveform subset according to the target simulation mode; and
selecting the at least one target waveform from the target waveform group according to the operation attribute information.

11. The method of claim 10, **characterized in that** in a case where the target simulation mode comprises the sound simulation mode and the vibration simulation mode, the at least one target waveform comprises at least one first waveform and at least one second waveform; and
the at least one first waveform is a vibration waveform selected from the vibration waveform group of the target waveform subset according to the operation attribute information; and the at least one second waveform is a sound waveform selected from the sound waveform group of the target waveform subset according to the operation attribute information.

12. The method of claim 11, **characterized in that** in a case where the number of the at least one first waveform is at least two, and the number of the at least one second waveform is at least two, the step of controlling the motor device (120) to perform the vibration operation according to the operation attribute information and the at least one target waveform comprises:
determining a proportion of each of at least two first waveforms and a proportion of each of at least two second waveforms according to the operation attribute information;
determining the target vibration waveform according to the at least two first waveforms and the proportion of each of the at least two first waveforms;
determining the target sound waveform according to the at least two second waveforms and the proportion of each of the at least two second waveforms; and
the step of controlling the motor device (120) to perform the vibration operation according to the target vibration waveform and the target sound waveform.

13. The method of claim 12, **characterized in that** the step of determining the proportion of each of the at least two first waveforms and the proportion of each of the at least two second waveforms according to the operation attribute information comprises:
determining writing operation parameters according to writing speed information, writing pressure information or a combination thereof in the operation attribute information; and
determining the proportion of each of the at least two first waveforms and the proportion of each of the at least two second waveforms according to the writing operation parameters;
**characterized in that** the writing pressure information is a pressure detection signal output by a pressure detection device (130) of the active stylus (100).

14. The method of claim 13, **characterized in that** the step of generating the drive signal according to the PWM carrier and the composite waveform comprises:
determining a duty cycle of the PWM carrier according to the writing speed information, the writing pressure information or a combination thereof; and
generating the drive signal according to the composite waveform, the PWM carrier and the duty cycle of the PWM carrier.
